(19) Europäisches Patentamt / European Patent Office / Office européen des brevets

(11) **EP 4 753 196 A1**

(12) **EUROPEAN PATENT APPLICATION**
published in accordance with Art. 153(4) EPC

(43) Date of publication:
03.06.2026 Bulletin 2026/23

(21) Application number: 24855610.2

(22) Date of filing: 05.08.2024

(51) International Patent Classification (IPC):
*H04L 5/00* (2006.01)

(52) Cooperative Patent Classification (CPC):
H04B 7/06; H04B 17/30; H04L 5/00;
H04W 72/0446; H04W 72/0453; H04W 72/23

(86) International application number:
PCT/CN2024/109782

(87) International publication number:
WO 2025/039884 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.08.2023 CN 202311049615

(71) Applicant: HUAWEI TECHNOLOGIES CO., LTD.
Shenzhen 518129 (CN)

(72) Inventors:
• YUAN, Yiling
  Shenzhen, Guangdong 518129 (CN)
• GAO, Junhui
  Shenzhen, Guangdong 518129 (CN)
• WANG, Xiaohan
  Shenzhen, Guangdong 518129 (CN)
• JIN, Huangping
  Shenzhen, Guangdong 518129 (CN)

(74) Representative: Maiwald GmbH
Engineering
Elisenhof
Elisenstrasse 3
80335 München (DE)

(54) **PILOT MAPPING METHOD AND APPARATUS**

(57) A pilot mapping method and an apparatus are provided, to implement pilot mapping corresponding to ports whose quantity is greater than 32. The method includes: determining time-frequency resource positions of CDM groups that correspond to each group of ports in X groups of ports and that are associated with Y positions, where each group of ports is distributed in a different resource block RB, X is determined based on a total quantity P of ports, a quantity of CDM groups is determined based on P and a type of the CDM group, X>1, Y≥1, P>32, and X, Y, and P are integers; and sending first indication information, where the first indication information indicates the time-frequency resource positions of the CDM groups that correspond to each group of ports in the X groups of ports and that are associated with the Y positions. The solutions provided in embodiments of this application implement mapping of a pilot resource corresponding to ports whose quantity is greater than 32 and meet a pilot measurement requirement corresponding to an increasing quantity of ports.

Method 600

Network device — Terminal device

S610: Determine time-frequency resource positions of CDM groups that correspond to each group of ports in X groups of ports and that are associated with Y positions

S620: First indication information

S630: Measure, based on the first indication information, a pilot signal transmitted on ports corresponding to the CDM group

FIG. 6

**Description**

This application claims priority to Chinese Patent Application No. 202311049615.9, filed with the China National Intellectual Property Administration on August 18, 2023 and entitled "PILOT MAPPING METHOD AND APPARATUS", which is incorporated herein by reference in its entirety.

**TECHNICAL FIELD**

This application relates to the communication field, and more specifically, to a pilot mapping method and an apparatus.

**BACKGROUND**

With popularization of devices using a 5th generation (5th generation, 5G) mobile communication technology and emergence of massive new service types such as extended reality (extended reality, XR) and a short video, a requirement for traffic has increased significantly. To meet a rapidly increasing traffic requirement, a frequency division duplex (frequency division duplex, FDD) massive multiple-input multiple-output (multiple-input multiple-output, MIMO) technology is evolving toward a larger antenna scale. In a conventional FDD system, a terminal device needs to feed back channel state information (channel state information, CSI) of a downlink channel to a network device. The network device needs to first send signaling for configuring channel measurement, to notify the terminal device of channel measurement time and behavior. Then, the network device sends a pilot (for example, a channel state information pilot (channel state information reference signal, CSI-RS)) to the terminal device for channel measurement.

In a related technology, only a configuration of a pilot resource corresponding to a maximum of 32 ports is supported. For an FDD system with more ports, how to configure a pilot resource becomes an urgent technical problem to be resolved.

**SUMMARY**

Embodiments of this application provide a pilot mapping method and an apparatus, to implement pilot mapping corresponding to ports whose quantity is greater than 32.

To achieve the foregoing objective, the following technical solutions are used in this application.

According to a first aspect, a pilot mapping method is provided. The method may be performed by a network device, or may be performed by a component of the network device, for example, a processor, a chip, or a chip system of the network device, or may be implemented by a logical module or software that can implement all or some functions of the network device. For example, the method may be performed by the network device. The method includes: The network device determines time-frequency resource positions of CDM groups that correspond to each group of ports in X groups of ports and that are associated with Y positions, where each group of ports is distributed in a different resource block RB, X is determined based on a total quantity P of ports, a quantity of CDM groups is determined based on P and a type of the CDM group, $X>1$, $Y \geq 1$, $P>32$, and X, Y, and P are integers. The network device sends first indication information, where the first indication information indicates the time-frequency resource positions of the CDM groups that correspond to each group of ports in the X groups of ports and that are associated with the Y positions.

According to the pilot mapping method provided in this embodiment of this application, when the quantity of the ports is greater than 32, the time-frequency resources of the CDM groups associated with each group of ports can be determined. The network device sends, to a terminal device, the first indication information indicating the time-frequency resource positions of the CDM groups, so that the terminal device can measure a pilot signal transmitted on ports corresponding to the CDM group, mapping of a pilot resource corresponding to ports whose quantity is greater than 32 is implemented, and a pilot measurement requirement corresponding to an increasing quantity of ports is met.

In a possible implementation, indexes of the CDM groups that correspond to each group of ports in the X groups of ports and that are associated with the Y positions are sorted in an order of a port group, a frequency domain resource position, and a time domain resource position. In each group of ports corresponding to the indexes of the CDM groups, a polarization direction of a half of the ports is a first polarization direction, and a polarization direction of the other half of the ports is a second polarization direction. In this solution, a polarization direction configuration corresponding to 32 ports can be reused, so that resource overheads are reduced and low implementation complexity is achieved.

In a possible implementation, pilot sequences of CDM groups corresponding to $y^{th}$ positions in all the X groups of ports are the same, and $1 \leq y \leq Y$. The pilot sequences of the CDM groups corresponding to the $y^{th}$ positions in all the groups of ports are the same, so that a mapping rule of a pilot sequence corresponding to 32 ports can be reused, to achieve low implementation complexity.

In a possible implementation, a difference between numbers of pilot sequences of CDM groups corresponding to

$y^{th}$ positions in adjacent groups of ports in the X groups of ports is an integer greater than or equal to 1, and $1 \leq y \leq Y$. Pilot sequences of CDM groups corresponding to $y^{th}$ positions in all the groups of ports are different, so that differential mapping can be performed on the pilot sequences corresponding to all the groups of ports. This is more flexible.

In a possible implementation, when P is greater than a first threshold, $\rho$ is less than a second threshold, and $\rho$ indicates a quantity of resource elements REs occupied by each port in each RB. P cannot be infinitely large. The second threshold may be limited by using the first threshold, to avoid excessively large pilot overheads caused by an excessively large quantity of ports. For example, the first threshold may be 64, and the second threshold may be 0.5.

In a possible implementation, the Y positions corresponding to each group of ports in the X groups of ports are determined based on a bitmap. Reusing a method for determining a time-frequency resource position of a CDM group corresponding to 32 ports makes a small change to an existing protocol.

In a possible implementation, Y positions corresponding to a first group of ports in the X groups of ports are determined based on a bitmap; and

Y positions corresponding to another group of ports in the X groups of ports other than the first group of ports are determined based on a frequency domain resource position relationship that is between the first group of ports and the another group of ports and that is agreed on in a protocol. A method of combining a time-frequency resource position of a CDM group corresponding to 32 ports with the protocol is used to determine the time-frequency resource positions of the CDM groups. This is more flexible.

The Y positions may be frequency domain resource positions.

In a possible implementation, the terminal device can only support a pilot resource corresponding to a maximum of 32 ports, and an RB corresponding to any group of ports in the X groups of ports is used to carry a pilot resource corresponding to ports whose quantity is less than or equal to 32. The pilot resource corresponding to a maximum of 32 ports can be carried in the RB corresponding to the any group of ports in the X groups of ports, and a configuration of a pilot resource corresponding to ports whose quantity is greater than 32 may be reused. When the quantity of the ports is less than or equal to 32, a pilot resource corresponding to ports whose quantity is less than 32 can also be transmitted in an RB configured when there are more than 32 ports, to reduce overheads of separately configuring the pilot resource corresponding to the ports whose quantity is greater than 32 and the pilot resource corresponding to the ports whose quantity is less than or equal to 32.

According to a second aspect, a pilot mapping method is provided. The method may be performed by a terminal device, or may be performed by a component of the terminal device, for example, a processor, a chip, or a chip system of the terminal device, or may be implemented by a logical module or software that can implement all or some functions of the terminal device. For example, the method may be performed by the terminal device. The method includes: The terminal device receives first indication information, where the first indication information indicates time-frequency resource positions of CDM groups that correspond to each group of ports in X groups of ports and that are associated with Y positions, each group of ports is distributed in a different resource blocks RB, X is determined by a total quantity P of ports, a quantity of CDM groups is determined based on P and a type of the CDM group, X is an integer greater than 1, Y is an integer greater than or equal to 1 and less than or equal to 6, and P is an integer greater than 32. The terminal device measures, based on the first indication information, a pilot resource transmitted on ports corresponding to the CDM group.

According to the pilot mapping method provided in this embodiment of this application, when the quantity of the ports is greater than 32, the time-frequency resources of the CDM groups associated with each group of ports can be determined. A network device sends, to the terminal device, the first indication information indicating the time-frequency resource positions of the CDM groups, so that the terminal device can measure a pilot signal transmitted on the ports corresponding to the CDM group, mapping of a pilot resource corresponding to ports whose quantity is greater than 32 is implemented, and a pilot measurement requirement corresponding to an increasing quantity of ports is met.

In a possible implementation, indexes of the CDM groups that correspond to each group of ports in the X groups of ports and that are associated with the Y positions are sorted in an order of a port group, a frequency domain resource position, and a time domain resource position. In each group of ports corresponding to the indexes of the CDM groups, a polarization direction of a half of the ports is a first polarization direction, and a polarization direction of the other half of the ports is a second polarization direction. In this solution, a polarization direction configuration corresponding to 32 ports can be reused, so that resource overheads are reduced and low implementation complexity is achieved.

In a possible implementation, pilot sequences of CDM groups corresponding to $y^{th}$ positions in all the X groups of ports are the same, and $1 \leq y \leq Y$. The pilot sequences of the CDM groups corresponding to the $y^{th}$ positions in all the groups of ports are the same, so that a mapping rule of a pilot sequence corresponding to 32 ports can be reused, to achieve low implementation complexity.

In a possible implementation, a difference between numbers of pilot sequences of CDM groups corresponding to $y^{th}$ positions in adjacent groups of ports in the X groups of ports is an integer greater than or equal to 1, and $1 \leq y \leq Y$. Pilot sequences of CDM groups corresponding to $y^{th}$ positions in all the groups of ports are different, so that differential mapping can be performed on the pilot sequences corresponding to all the groups of ports. This is more flexible.

In a possible implementation, when P is greater than a first threshold, $\rho$ is less than a second threshold, and $\rho$

indicates a quantity of resource elements occupied by each port in each RB. P cannot be infinitely large. The second threshold may be limited by using the first threshold, to avoid excessively large pilot overheads caused by an excessively large quantity of ports. For example, the first threshold may be 64, and the second threshold may be 0.5. In a possible implementation, the Y positions corresponding to each group of ports in the X groups of ports are determined based on a bitmap. Reusing a method for determining time-frequency resource positions of a CDM group corresponding to 32 ports makes a small change to an existing protocol.

In a possible implementation, Y positions corresponding to a first group of ports in the X groups of ports are determined based on a bitmap; and

Y positions corresponding to another group of ports in the X groups of ports other than the first group of ports are determined based on a frequency domain resource position relationship that is between the first group of ports and the another group of ports and that is agreed on in a protocol. A method of combining a time-frequency resource position of a CDM group corresponding to 32 ports with the protocol is used to determine the time-frequency resource positions of the CDM groups. This is more flexible.

The Y positions may be frequency domain resource positions.

In a possible implementation, the terminal device can only support a pilot resource corresponding to a maximum of 32 ports, and an RB corresponding to any group of ports in the X groups of ports is used to carry a pilot resource corresponding to ports whose quantity is less than or equal to 32. The pilot resource corresponding to a maximum of 32 ports can be carried in the RB corresponding to the any group of ports in the X groups of ports, and a configuration of a pilot resource corresponding to ports whose quantity is greater than 32 may be reused. When the quantity of the ports is less than or equal to 32, a pilot resource corresponding to ports whose quantity is less than 32 can also be transmitted in an RB configured when there are more than 32 ports, to reduce overheads of separately configuring the pilot resource corresponding to the ports whose quantity is greater than 32 and the pilot resource corresponding to the ports whose quantity is less than or equal to 32.

According to a third aspect, a pilot mapping method is provided. The method may be performed by a network device, or may be performed by a component of the network device, for example, a processor, a chip, or a chip system of the network device, or may be implemented by a logical module or software that can implement all or some functions of the network device. For example, the method may be performed by the network device. The method includes: The network device determines pilot sequences of CDM groups that correspond to each group of ports in X groups of ports and that are associated with Y positions, where each group of ports is distributed in a different RB, X is determined based on a total quantity P of ports, a quantity of CDM groups is determined based on P and a type of the CDM group, $X>1$, $Y\geq1$, $P>32$, and X, Y, and P are integers. The network device sends a pilot signal corresponding to the pilot sequence.

According to the pilot mapping method provided in this embodiment of this application, when the quantity of the ports is greater than 32, the pilot sequences of the CDM groups associated with each group of ports can be determined, so that the pilot sequences are mapped to different pilot resources, mapping of a pilot resource corresponding to ports whose quantity is greater than 32 is implemented, and a pilot measurement requirement corresponding to an increasing quantity of ports is met.

In a possible implementation, pilot sequences of CDM groups corresponding to $y^{th}$ positions in all the X groups of ports are the same, and $1\leq y\leq Y$. The pilot sequences of the CDM groups corresponding to the $y^{th}$ positions in all the groups of ports are the same, so that a mapping rule of a pilot sequence corresponding to 32 ports can be reused, to achieve low implementation complexity.

In a possible implementation, a difference between numbers of pilot sequences of CDM groups corresponding to $y^{th}$ positions in adjacent groups of ports in the X groups of ports is an integer greater than or equal to 1, and $1\leq y\leq Y$. Pilot sequences of CDM groups corresponding to $y^{th}$ positions in all the groups of ports are different, so that differential mapping can be performed on the pilot sequences corresponding to all the groups of ports. This is more flexible.

According to a fourth aspect, a pilot mapping method is provided. The method may be performed by a terminal device, or may be performed by a component of the terminal device, for example, a processor, a chip, or a chip system of the terminal device, or may be implemented by a logical module or software that can implement all or some functions of the terminal device. For example, the method may be performed by the terminal device. The method includes: The terminal device receives a pilot signal corresponding to a pilot sequence, where the pilot sequence is determined based on CDM groups that correspond to each group of ports in X groups of ports and that are associated with Y positions, each group of ports is distributed in a different resource block, X is determined based on a total quantity P of ports, a quantity of CDM groups is determined based on P and a type of the CDM groups, $X>1$, $Y\geq1$, $P>32$, and X, Y, and P are integers; and measures the pilot signal.

In a possible implementation, pilot sequences of CDM groups corresponding to $y^{th}$ positions in all the X groups of ports are the same, and $1\leq y\leq Y$. The pilot sequences of the CDM groups corresponding to the $y^{th}$ positions in all the groups of ports are the same, so that a mapping rule of a pilot sequence corresponding to 32 ports can be reused, to achieve low implementation complexity.

In a possible implementation, a difference between numbers of pilot sequences of CDM groups corresponding to

$y^{th}$ positions in adjacent groups of ports in the X groups of ports is an integer greater than or equal to 1, and $1 \leq y \leq Y$. Pilot sequences of CDM groups corresponding to $y^{th}$ positions in all the groups of ports are different, so that differential mapping can be performed on the pilot sequences corresponding to all the groups of ports. This is more flexible.

According to a fifth aspect, a communication apparatus is provided, to implement the foregoing methods. The communication apparatus may be the network device in the first aspect or the third aspect, or an apparatus included in the network device, for example, a chip. Alternatively, the communication apparatus may be the terminal device in the second aspect or the fourth aspect, or an apparatus included in the terminal device, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) and input (or receiving) functions in any one of the foregoing aspects and any possible design of the aspect. The processing module may be configured to implement a processing function in any one of the foregoing aspects and any possible design of the aspect.

Optionally, the communication apparatus further includes a storage module 1430, configured to store program instructions and data.

According to a sixth aspect, a communication apparatus is provided, and includes at least one processor. The processor is configured to run a computer program or instructions, or is configured to cause, through a logic circuit, the communication apparatus to perform the method according to any one of the foregoing aspects. The communication apparatus may be the network device in the first aspect, or an apparatus included in the network device, for example, a chip. Alternatively, the communication apparatus may be the terminal device in the second aspect, or an apparatus included in the terminal device, for example, a chip.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to receive computer-executable instructions (where the computer-executable instructions are stored in the memory, and may be directly read from the memory, or may be read via another component), and transmit the computer-executable instructions to the processor.

In some possible designs, the communication interface is configured to communicate with a module other than the communication apparatus.

In some possible designs, the communication apparatus may be a chip system. When the communication apparatus is the chip system, the chip system may include a chip, or may include the chip and another discrete component.

According to a seventh aspect, a communication apparatus is provided, and includes a logic circuit and an interface circuit. The interface circuit is configured to input information and/or output information. The logic circuit is configured to perform the method according to any one of the foregoing aspects, and perform processing and/or generate the output information based on the input information. The communication apparatus may be the network device in the first aspect or the third aspect, or an apparatus included in the network device, for example, a chip. Alternatively, the communication apparatus may be the terminal device in the second aspect or the fourth aspect, or an apparatus included in the terminal device, for example, a chip.

According to an eighth aspect, a computer-readable storage medium is provided. The computer-readable storage medium stores a computer program or instructions. When the computer program or the instructions are executed by a processor, the method according to any one of the foregoing aspects is performed.

According to a ninth aspect, a computer program product is provided. When the computer program product is executed by a processor, the method according to any one of the foregoing aspects is performed.

It may be understood that when the communication apparatus provided in any one of the fifth aspect to the eighth aspect is a chip, the foregoing sending action/function may be understood as outputting information, and the foregoing receiving action/function may be understood as inputting information.

For technical effects brought by any one of designs of the fifth aspect to the eighth aspect, refer to the technical effects brought by the different designs of the first aspect to the fourth aspect. Details are not described herein again.

According to a tenth aspect, a communication system is provided. The communication system includes the network device according to the first aspect or the third aspect and the terminal device according to the second aspect or the fourth aspect.

## BRIEF DESCRIPTION OF DRAWINGS

FIG. 1 is a diagram of a basic pattern of CDM2 and OCC mapping according to an embodiment of this application;
FIG. 2 is a diagram of a basic pattern of CDM4 and OCC mapping according to an embodiment of this application;
FIG. 3 is a diagram of a basic pattern of CDM8 and OCC mapping according to an embodiment of this application;
FIG. 4 is a diagram of a system architecture according to an embodiment of this application;
FIG. 5 is a diagram of a communication device according to an embodiment of this application;
FIG. 6 is a diagram of an example of a pilot mapping method according to an embodiment of this application;
FIG. 7 is a diagram in which Y positions are Y frequency domain resource positions according to an embodiment of this application;
FIG. 8 is a diagram in which Y positions are Y time-frequency resource positions according to an embodiment of this application;
FIG. 9 is a diagram of four frequency domain resource positions corresponding to each group of ports in two groups of ports according to an embodiment of this application;
FIG. 10 is a diagram of pilot sequences of CDM groups corresponding to two groups of ports according to an embodiment of this application;
FIG. 11 is another diagram of pilot sequences of CDM groups corresponding to two groups of ports according to an embodiment of this application;
FIG. 12 is a diagram in which a resource block corresponding to any group of ports in X groups of ports is used to carry a pilot resource corresponding to ports whose quantity is less than or equal to 32 according to an embodiment of this application;
FIG. 13 is a diagram of another example of a pilot mapping method according to an embodiment of this application; and
FIG. 14 is a diagram of another example of a communication device according to an embodiment of this application.

## DESCRIPTION OF EMBODIMENTS

In descriptions of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

In the descriptions of this application, "a plurality of" means two or more unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in embodiments of this application. The execution sequences of the processes should be determined based on functions and internal logic of the processes, and should not be construed as any limitation on implementation processes of embodiments of this application.

It may be understood that, in this application, both "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, apparatuses provided in embodiments of this application may also correspondingly implement these features or functions. Details are not described herein.

In this application, unless otherwise specified, mutual reference may be made between same or similar parts of embodiments. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding of technical solutions in embodiments of this application, the following first briefly describes technologies and terms related to this application.

1. Time domain resource

Uplink transmission in a new radio (new radio, NR) system may form a plurality of radio frames (frame). Duration of each radio frame is $T_f = (\Delta f_{max} N_f / 100) = 10$ ms. Each radio frame may include 10 subframes whose duration is $T_{sf} = (\Delta f_{max} N_f / 1000) = 1$ ms. 10 subframes in one radio frame may be arranged in sequence. For example, the 10 subframes in one radio frame may be sorted as: a subframe #0 to a subframe #9. It may be understood that numbers and a sequence of the subframe #0 to the subframe #9 are merely examples. For example, a start number may alternatively be #1, and one radio frame includes a subframe #1 to a subframe #10. For another example, the 10 subframes may be sorted in descending order, and one radio frame includes a subframe #9 to a subframe #0. This is not specifically limited in embodiments of this application.

In the NR system, one subframe may include a plurality of slots (slot). For a subcarrier spacing configuration $\mu$, the slots may be arranged in ascending order of numbers in one subframe as $n_s^\mu \in \left\{0, \dots, N_{slot}^{subframe,\mu} - 1\right\}$, and may be arranged in ascending order of numbers in one radio frame as $n_{s,f}^\mu \in \left\{0, \dots, N_{slot}^{frame,\mu} - 1\right\}$. One slot includes $N_{symb}^{slot}$ consecutive orthogonal frequency division multiplexing (orthogonal frequency division multiplexing, OFDM) symbols, as shown in Table 1 and Table 2. A start of a slot $n_s^\mu$ in one subframe is time-aligned with a start of an OFDM symbol $n_s^\mu N_{symb}^{slot}$ in the same subframe. For example, when one slot includes 14 OFDM symbols, the OFDM symbols may be sorted in chronological order as: an OFDM symbol #0 to an OFDM symbol #13.

Table 1

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

2. Frequency domain resource

In an NR system, the frequency domain resource may be classified into a resource element (resource element, RE), a resource block (resource block, RB), and a bandwidth part (bandwidth part, BWP) based on a size of the frequency domain resource, which are separately described below.

2.1. RE

In the NR system, one subcarrier in frequency domain and one OFDM symbol in time domain may be defined as the RE. The RE is a resource at a minimum granularity at a physical layer. The RE may also be understood as a time-frequency resource. In other words, the RE includes a time domain resource and a frequency domain resource.

2.2. RB

In frequency domain, regardless of a subcarrier spacing, 12 consecutive subcarriers may be defined as one RB in the NR system. At the physical layer, the RB may be referred to as a physical resource block (physical resource block, PRB).

It may be understood that the time-frequency resource in embodiments of this application includes the foregoing time domain resource and frequency domain resource. This is uniformly described herein, and details are not described below again.

3. Code division multiplexing (code division multiplexing, CDM)

A same time-frequency resource may be shared by using an orthogonal cover code (orthogonal cover code, OCC) in time domain and frequency domain. This manner is referred to as CDM. CDM is classified into a plurality of types. Currently, CDM includes four basic types. The type of the CDM is not limited in embodiments of this application.

For example, the four basic types of CDM may include: No CDM (no CDM), CDM2, CDM4, and CDM8. All ports corresponding to CDM are mapped to all REs, and the REs are distinguished by using the OCC. Examples are as follows.

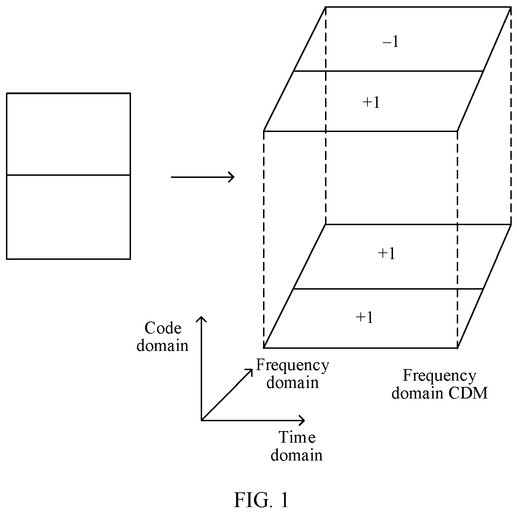

FIG. 1 is a diagram of a basic pattern of CDM2 and OCC mapping. As shown in FIG. 1, for CDM2, no multiplexing is performed in time domain, and multiplexing is performed only in frequency domain. To be specific, one symbol is occupied in time domain, and two consecutive subcarriers are occupied in frequency domain. In other words, the basic pattern of CDM2 occupies two REs.

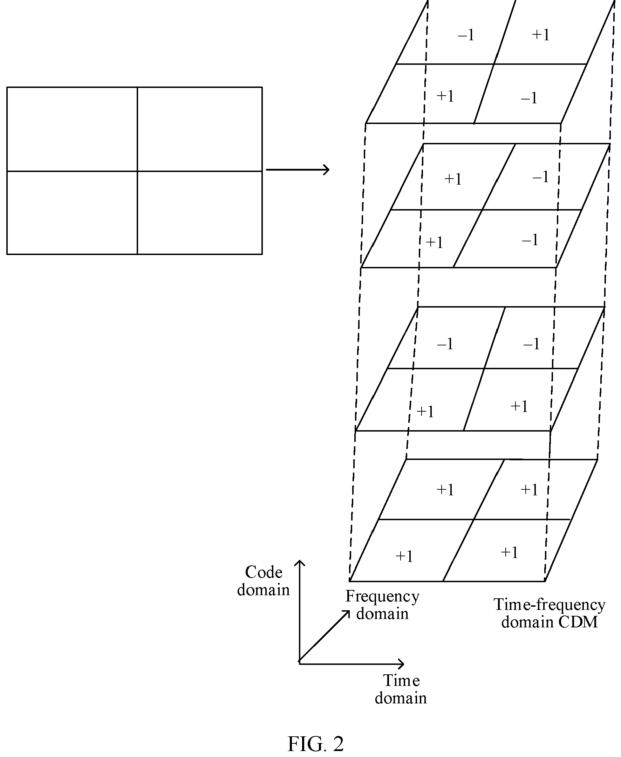

FIG. 2 is a diagram of a basic pattern of CDM4 and OCC mapping. As shown in FIG. 2, for CDM4, multiplexing is performed in both time domain and frequency domain, and two consecutive symbols and two consecutive subcarriers are occupied respectively. In other words, the basic pattern of CDM4 occupies four REs.

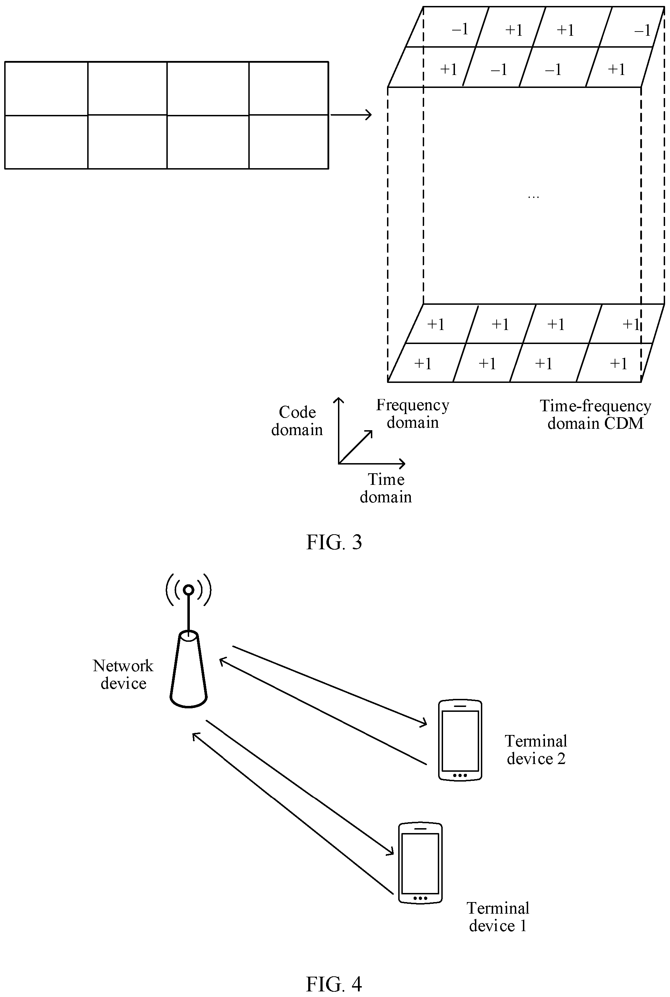

FIG. 3 is a diagram of a basic pattern of CDM8 and OCC mapping. As shown in FIG. 3, for CDM8, multiplexing is performed in both time domain and frequency domain, and four consecutive symbols and two consecutive subcarriers are multiplexed respectively. In other words, the basic pattern of CDM8 occupies eight REs.

4. CDM group

A CDM group is a basic CDM type.

For example, assuming that a type of the CDM group is CDM4, and a quantity of ports corresponding to a pilot resource is 16, the 16 ports correspond to four groups of CDM4, and indexes of the four CDM groups are 0, 1, 2, and 3 respectively.

For example, assuming that a type of the CDM group is CDM2, and a quantity of ports corresponding to a pilot resource is 16, the 16 ports correspond to eight groups of CDM2, and indexes of the eight CDM groups are 0, 1, 2, 3, 4, 5, 6, and 7 respectively.

5. Type of CDM available for 32 ports

A quantity of ports corresponding to a pilot resource may be 1, 2, 4, 8, 12, 16, 24, or 32. A plurality of CDM groups that carry the pilot resource correspond to M adjacent subcarriers in frequency domain, and correspond to Z adjacent symbols in time domain, where an index of a start subcarrier position of the plurality of CDM groups that carry the pilot resource in frequency domain is an integer multiple of M.

It should be noted that only a mapping rule of a port time-frequency resource position corresponding to a maximum of 32 ports is described herein. However, a mapping rule of a port time-frequency corresponding to ports whose quantity is greater than 32 is not limited in this application.

It should be understood that, in embodiments of this application, a pilot signal is carried on the pilot resource for transmission. In some descriptions, the pilot resource may be equivalent to the pilot signal. For example, the pilot resource is measured, or the pilot signal is measured. This is not limited in embodiments of this application.

Table 3 shows types of CDM available for ports. As shown in Table 3, an index order of the ports is shown in the following formula:

$$p = 3000 + s + jL$$

$$j = 0,1,\dots,\frac{P}{L} - 1$$

$$s = 0,1,\dots,L - 1$$

*p* indicates a port index, and starts from 3000. *j* indicates a CDM group index. *s* indicates an index of an OCC sequence in a CDM group. P indicates a total quantity of the ports. L indicates a size of a CDM group. In the table, $(\overline{k}, \overline{l})$ indicates a time-frequency resource position of the CDM group in one RB, $\overline{k}$ indicates a frequency domain resource position, $\overline{l}$ indicates a time domain position, $\rho$ indicates frequency-domain density, which indicates a quantity of REs occupied by each port in each RB, and *k'* and *l'* indicate a time-frequency index of an RE in one CDM group.

$\overline{k}$ is repeated every $\lceil 1/\rho \rceil$ RBs, $\overline{k}$ is indicated by a bitmap (bitmap), and $\overline{l}$ is directly given by using a higher-layer parameter.

It can be learned from the CDM group indexes in Table 3 that frequency domain resource positions of the CDM groups are in a same RB. In each RB, according to an existing protocol, a first half and a second half of the port indexes, or a first half and a second half of the CDM group indexes respectively correspond to two different polarization directions.

Table 3

| Row | Ports P | Density $\rho$ | cdm-Type | $(\overline{k},\overline{l})$ | CDM group index j | k' | l' |
|---|---|---|---|---|---|---|---|
| 1 | 1 | 3 | No CDM | $(k_0,l_0)$, $(k_0 + 4, l_0)$, $(k_0 + 8,l_0)$ | 0,0,0 | 0 | 0 |
| 2 | 1 | 1, 0.5 | No CDM | $(k_0,l_0)$, | 0 | 0 | 0 |
| 3 | 2 | 1, 0.5 | FD-CDM2 | $(k_0, l_0)$, | 0 | 0, 1 | 0 |
| 04 | 4 | 1 | FD-CDM2 | $(k_0, l_0)$, $(k_0 + 2, l_0)$ | 0,1 | 0, 1 | 0 |
| 5 | 4 | 1 | FD-CDM2 | $(k_0, l_0)$, $(k_0, l_0 + 1)$ | 0,1 | 0, 1 | 0 |
| 6 | 8 | 1 | FD-CDM2 | $(k_0,l_0)$, $(k_1,l_0)$, $(k_2,l_0)$, $(k_3,l_0)$ | 0,1,2,3 | 0, 1 | 0 |
| 7 | 8 | 1 | FD-CDM2 | $(k_0, l_0)$, $(k_1,l_0)$, $(k_0, l_0 + 1)$, $(k_1,l_0 + 1)$ | 0,1,2,3 | 0, 1 | 0 |
| 8 | 8 | 1 | CDM4 (FD2, TD2) | $(k_0, l_0)$, $(k_1, l_0)$ | 0,1 | 0, 1 | 0, 1 |
| 9 | 12 | 1 | FD-CDM2 | $(k_0, l_0)$, $(k_1,l_0)$, $(k_2,l_0)$, $(k_3,l_0)$, $(k_4, l_0)$, $(k_5,l_0)$ | 0,1,2,3,4,5 | 0, 1 | 0 |
| 10 | 12 | 1 | CDM4 (FD2, TD2) | $(k_0, l_0)$, $(k_1,l_0)$, $(k_2,l_0)$ | 0,1,2 | 0, 1 | 0, 1 |
| 11 | 16 | 1, 0.5 | FD-CDM2 | $(k_0, l_0)$, $(k_1,l_0)$, $(k_2,l_0)$, $(k_3,l_0)$, $(k_0, l_0 + 1)$, $(k_1,l_0 + 1)$, $(k_2,l_0 + 1)$, $(k_3,l_0 + 1)$ | 0,1,2,3, 4,5,6,7 | 0, 1 | 0 |
| 12 | 16 | 1, 0.5 | CDM4 (FD2, TD2) | $(k_0,l_0)$, $(k_1,l_0)$, $(k_2,l_0)$, $(k_3,l_0)$ | 0,1,2,3 | 0, 1 | 0, 1 |
| 13 | 24 | 1, 0.5 | FD-CDM2 | $(k_0, l_0)$, $(k_1,l_0)$, $(k_2,l_0)$, $(k_0, l_0 + 1)$, $(k_1,l_0 + 1)$, $(k_2, l_0 + 1)$,$(k_0,l_1)$, $(k_1, l_1)$, $(k_2,l_1)$, $(k_0, l_1 + 1)$, $(k_1,l_1 + 1)$, $(k_2,l_1 + 1)$ | 0,1,2,3,4,5, 6,7,8,9,10,11 | 0, 1 | 0 |

(continued)

| Row | Ports P | Density $\rho$ | cdm-Type | $(\bar{k},\bar{l})$ | CDM group index j | k' | l' |
|---|---|---|---|---|---|---|---|
| 14 | 24 | 1, 0.5 | CDM4 (FD2, TD2) | $(k_0, l_0)$, $(k_1,l_0)$, $(k_2,l_0)$, $(k_0, l_1)$, $(k_1, l_1)$, $(k_2,l_1)$ | 0,1,2,3,4,5 | 0, 1 | 0, 1 |
| 15 | 24 | 1, 0.5 | CDM8 (FD2, TD4) | $(k_0, l_0)$, $(k_1,l_0)$, $(k_2,l_0)$ | 0,1,2 | 0, 1 | 0, 1, 2, 3 |
| 16 | 32 | 1, 0.5 | FD-CDM2 | $(k_0, l_0)$, $(k_1,l_0)$, $(k_2,l_0)$, $(k_3,l_0)$, $(k_0,l_0 + 1)$, $(k_1,l_0 + 1)$, $(k_2,l_0 + 1)$, $(k_3,l_0 + 1)$, $(k_0, l_1)$, $(k_1,l_1)$, $(k_2,l_1)$, $(k_3,l_1)$, $(k_0, l_1 + 1)$, $(k_1,l_1 + 1)$, $(k_2,l_1 + 1)$, $(k_3,l_1 + 1)$ | 0,1,2,3, 4,5,6,7, 8,9,10,11, 12,13,14,15 | 0, 1 | 0 |
| 17 | 32 | 1, 0.5 | CDM4 (FD2, TD2) | $(k_0,l_0)$, $(k_1,l_0)$, $(k_2, l_0)$, $(k_3,l_0)$, $(k_0, l_1)$, $(k_1,l_1)$, $(k_2, l_1)$, $(k_3,l_1)$ | 0,1,2,3,4,5,6,7 | 0, 1 | 0, 1 |
| 18 | 32 | 1, 0.5 | CDM8 (FD2, TD4) | $(k_0, l_0)$, $(k_1,l_0)$, $(k_2, l_0)$, $(k_3,l_0)$ | 0,1,2,3 | 0,1 | 0,1, 2, 3 |

FIG. 4 is a diagram of a system architecture according to an embodiment of this application. As shown in FIG. 4, a communication system in this embodiment of this application may include a plurality of terminal devices and at least one network device (or an access device).

One or more of the plurality of terminal devices may send uplink data to the network device (or the access device), and the network device (or the access device) may receive the uplink data from the one or more terminal devices.

The network device (or the access device) may send downlink data to the one or more of the plurality of terminal devices, and the one or more of the plurality of terminal devices may receive the downlink data from the network device (or the access device). Optionally, the one or more of the plurality of terminal devices may alternatively send the downlink data to one or more other terminal devices in the plurality of terminal devices.

The terminal device in this application may be user equipment (user equipment, UE), an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device having a wireless communication function, a compute device, another processing device connected to a wireless modem, a vehicle-mounted device, a vehicle-mounted transceiver unit, a wearable device, or a terminal apparatus in a network using a 5th generation (5th generation, 5G) mobile communication technology or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, an uncrewed aerial vehicle, a robot, a smart point of sale (point of sale, POS) machine, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in an internet of things (internet of things, IoT), for example, a terminal in V2X (for example, an internet of vehicles device), a terminal in D2D communication, or a terminal in M2M communication. The terminal may be movable or fixed.

A device form of the terminal is not limited in embodiments of this application. An apparatus configured to implement a function of the terminal device may be the terminal device, or may be an apparatus that supports the terminal device in implementing the function, for example, a chip system. The apparatus may be installed in the terminal device or used in cooperation with the terminal device. In embodiments of this application, the chip system may include a chip, or may include the chip and another discrete component.

The network device or the access device in this application may be a device configured to communicate with the terminal device, for example, may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario, or may include a next generation NodeB (next generation NodeB, gNB) in an NR system, or may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like, or may include a base station in a non-terrestrial network (non-terrestrial network, NTN), to be specific, may be deployed on an airplane platform or a satellite. In the NTN, the network device or the access device may be used as a layer 1 (L1) relay (relay), may be used as a base station, or may be used as an integrated access and backhaul (integrated access and backhaul, IAB) node. Alternatively, the network device or the access device may be a device that implements functions of a base station in the IoT, for example, a device that implements the functions of the base station in uncrewed aerial vehicle communication, V2X, D2D, or machine-to-machine (machine-to-machine, M2M).

In some possible scenarios, the network device or the access device may alternatively be a module or unit that can implement some functions of the base station. For example, the network device or the access device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, the baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device or the access device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

A form of the network device or the access device is not limited in embodiments of this application. An apparatus configured to implement a function of the network device or the access device may be the network device or the access device, or may be an apparatus that supports the network device or the access device in implementing the function, for example, a chip system. The apparatus may be installed in the network device or the access device, or used in cooperation with the network device or the access device.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

Related functions of the terminal device or the network device in this application may be implemented by one device, or may be jointly implemented by a plurality of devices, or may be further implemented by one or more functional modules in one device; or may be implemented by one or more chips, or may be implemented by a system on chip (system on chip, SoC) or a chip system. The chip system may include a chip, or may include the chip and another discrete component. This is not specifically limited in embodiments of this application.

It may be understood that the foregoing function may be a network element in a hardware device, a software function running on dedicated hardware, a combination of hardware and software, or a virtualization function instantiated on a platform (for example, a cloud platform).

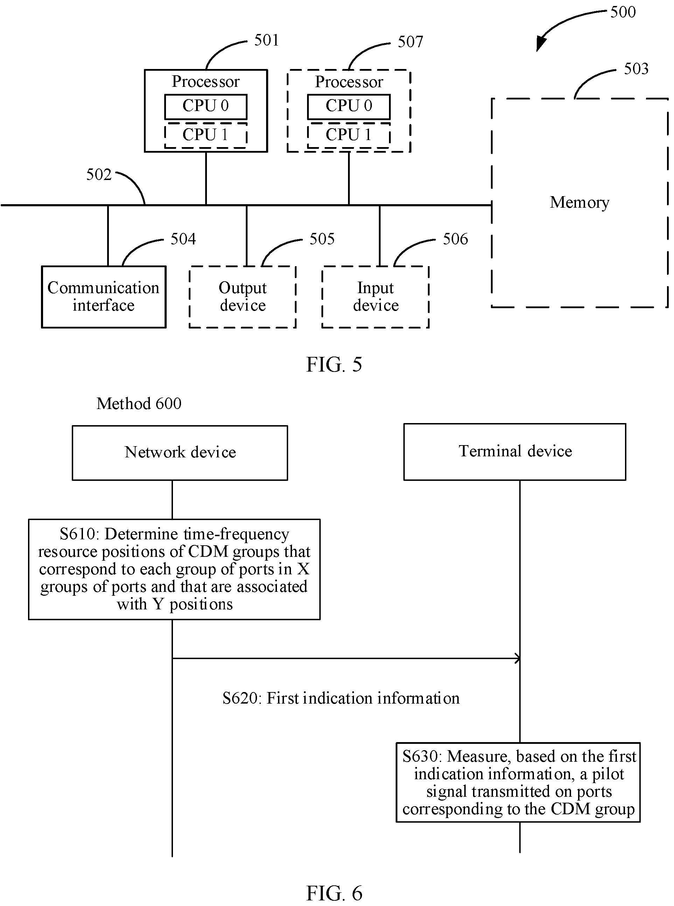

For example, related functions of the terminal device or the network device in this application may be implemented through a communication device 500 in FIG. 5. FIG. 5 is a diagram of a structure of a communication device 500 according to an embodiment of this application. The communication device 500 includes one or more processors 501, a communication line 502, and at least one communication interface (in FIG. 5, only an example in which a communication interface 504 and one processor 501 are included is used for description). Optionally, the communication device 500 may further include a memory 503.

The processor 501 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 502 may include a path for connecting different components.

The communication interface 504 may be a transceiver module configured to communicate with another device or a communication network, for example, an Ethernet, a RAN, or a wireless local area network (wireless local area networks, WLAN). For example, the transceiver module may be an apparatus, for example, a transceiver or a transceiver machine. Optionally, the communication interface 504 may alternatively be a transceiver circuit located inside the processor 501, and is configured to implement signal input and signal output of the processor.

The memory 503 may be an apparatus with a storage function, for example, may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the communication line 502. The memory may alternatively be integrated with the processor.

The memory 503 is configured to store computer-executable instructions for executing the solutions of this application, and the processor 501 controls execution. The processor 501 is configured to execute the computer-executable instructions stored in the memory 503, to implement the pilot mapping method provided in embodiments of this application.

Alternatively, optionally, in this embodiment of this application, the processor 501 may perform a processing-related function in a method provided in the following embodiments of this application, and the communication interface 504 is responsible for communicating with another device or a communication network. This is not specifically limited in embodiments of this application.

Optionally, the computer-executable instructions in embodiments of this application may also be referred to as application program code. This is not specifically limited in embodiments of this application.

In a specific implementation, in an embodiment, the processor 501 may include one or more CPUs, for example, a CPU 0 and a CPU 1 in FIG. 5.

In a specific implementation, in an embodiment, the communication device 500 may include a plurality of processors, for example, the processor 501 and a processor 507 in FIG. 5. Each of the processors may be a single-core (single-core) processor or may be a multi-core (multi-core) processor. The processor herein may include but is not limited to at least one of the following: various types of compute devices that run software, such as a central processing unit (central processing unit, CPU), a microprocessor, a digital signal processor (DSP), a microcontroller unit (microcontroller unit, MCU), or an artificial intelligence processor. Each compute device may include one or more cores for executing software instructions to perform an operation or processing.

In a specific implementation, in an embodiment, the communication device 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive a user input in a plurality of manners. For example, the input device 506 may be a mouse, a keyboard, a touchscreen device, a sensor device, or the like.

Sometimes, the foregoing communication device 500 may also be referred to as a communication apparatus, and may be a general-purpose device or a dedicated device. For example, the communication device 500 may be a desktop computer, a portable computer, a network server, a personal digital assistant (personal digital assistant, PDA), a mobile phone, a tablet computer, a wireless terminal device, an embedded device, the foregoing terminal, the foregoing network device, or a device having a structure similar to that in FIG. 5. A type of the communication device 500 is not limited in embodiments of this application.

In addition, a composition structure shown in FIG. 5 does not constitute a limitation on the communication apparatus. In addition to the components shown in FIG. 5, the communication apparatus may include more or fewer components than those shown in the figure, or some components may be combined, or different component arrangements may be used.

FIG. 6 is a diagram of a pilot mapping method according to an embodiment of this application. The method is described by using interaction between a network device and a terminal device as an example. As shown in FIG. 6, the method 600 includes the following steps.

S610: The network device determines time-frequency resource positions of CDM groups that correspond to each group of ports in X groups of ports and that are associated with Y positions.

In this embodiment of this application, pilot signals corresponding to different groups of ports are carried in different resource blocks, and pilot signals corresponding to a same group of ports may be carried in one resource block, or may be carried in a plurality of same resource blocks. For example, the resource block may be an RB.

In this embodiment of this application, a quantity X of groups of ports is determined based on a total quantity P of ports, where X is an integer greater than 1, and P is an integer greater than 32. For example, P may be an integer multiple of 8, 12, 16, 24, or 32, or P may be any integer greater than 32. This is not limited in embodiments of this application.

When P is determined, X may not be unique. For example, when P is 64, X may be 2, so that the network device can reuse a configuration of a pilot resource corresponding to 32 ports to a maximum extent, resource overheads are reduced, and low implementation complexity is achieved. Certainly, when P is 64, X may alternatively be an integer greater than 2. For example, X may be 3, a first group of ports may correspond to 32 ports in the 64 ports, a second group of ports may correspond to 16 ports in the 64 ports, and a third group of ports may correspond to 16 ports in the 64 ports. For another example, X may be 4, and each group of ports corresponds to 16 ports in the 64 ports. In other words, all the groups of ports may include a same quantity of ports or may include different quantities of ports. This is not limited in this application.

Y is an integer greater than or equal to 1.

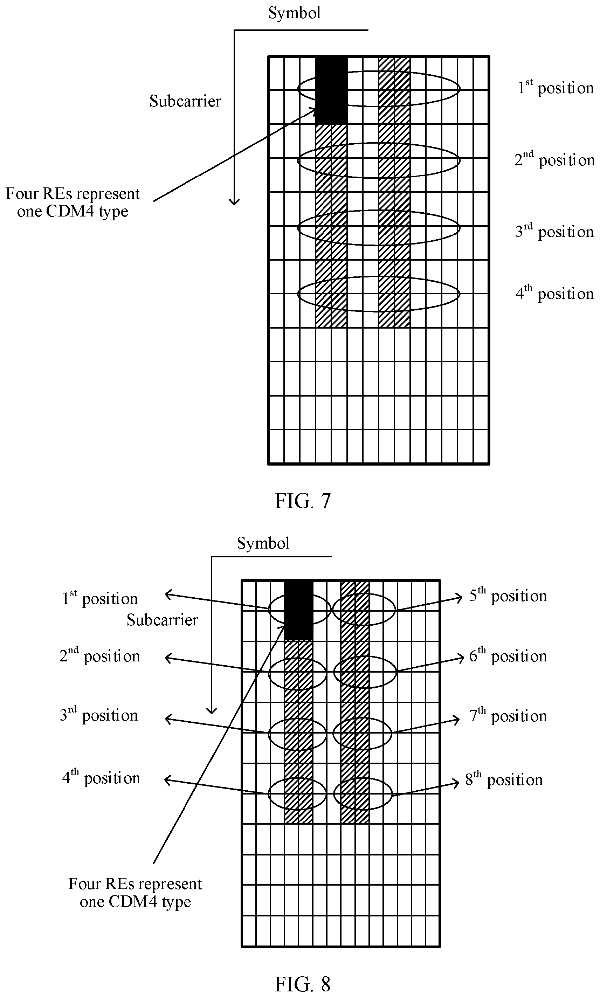

In a possible implementation, the Y positions may be Y frequency domain resource positions, and a quantity of CDM groups that correspond to each group of ports and that can be associated with the Y positions is greater than or equal to Y, so that time-frequency resource positions of CDM groups whose quantity is greater than or equal to Y can be determined. For example, FIG. 7 is a diagram in which Y positions are Y frequency domain resource positions. As shown in FIG. 7, there are four frequency domain resource positions, which may correspond to four positions in frequency domain and two positions in time domain. Four frequency domain resource positions corresponding to each group of ports may be associated with eight CDM groups. The Y positions correspond to Y frequency domain positions, and the time-frequency resource positions are determined based on a time domain resource status, so that a time-frequency resource associated with the CDM group is more flexible.

In another possible implementation, the Y positions may be Y time-frequency resource positions, and the Y positions corresponding to each group of ports may be associated with Y CDM groups, so that time-frequency resource positions of the Y CDM groups can be determined. For example, FIG. 8 is a diagram in which Y positions are Y time-frequency resource positions. As shown in FIG. 8, there are eight time-frequency resource positions, which correspond to four positions in frequency domain and two positions in time domain. Eight time-frequency resource positions corresponding to each group of ports may be associated with eight CDM groups. The Y positions correspond to the Y time-frequency resource positions, so that a time-frequency resource associated with the CDM group is indicated more accurately.

For example, the Y positions corresponding to each group of ports in the X groups of ports may be determined based on a bitmap. The Y positions may be the Y frequency domain resource positions, and the time-frequency resource positions of the CDM groups that correspond to each group of ports in the X groups of ports and that are associated with the Y frequency domain resource positions may be determined based on the bitmap. Reusing a method for determining time-frequency resource positions of a CDM group corresponding to 32 ports makes a small change to an existing protocol.

For example, Y positions corresponding to a first group of ports in the X groups of ports may be determined based on the bitmap, and Y positions corresponding to another group of ports in the X groups of ports other than the first group of ports are determined based on a frequency domain resource position relationship that is between the first group of ports and the another group of ports and that is agreed on in a protocol. The Y positions may be the Y frequency domain resource positions. Time-frequency resource positions of the CDM groups that correspond to the first group of ports in the X groups of ports and that are associated with the Y frequency domain resource positions may be determined based on the bitmap. Time-frequency resource positions of the CDM groups that correspond to the another group of ports in the X groups of ports other than the first group of ports and that are associated with the Y frequency domain positions are determined based on a time-frequency resource position relationship that is between the first group of ports and the another group of ports and that is agreed on in the protocol. A method of combining the time-frequency resource positions of a CDM group corresponding to 32 ports with the protocol is used to determine the time-frequency resource positions of the CDM groups. This is more flexible.

It should be understood that FIG. 7 and FIG. 8 show a time-frequency resource corresponding to one RB in frequency domain and one subframe in time domain, that is, a time-frequency resource including 12 subcarriers and 14 OFDM symbols.

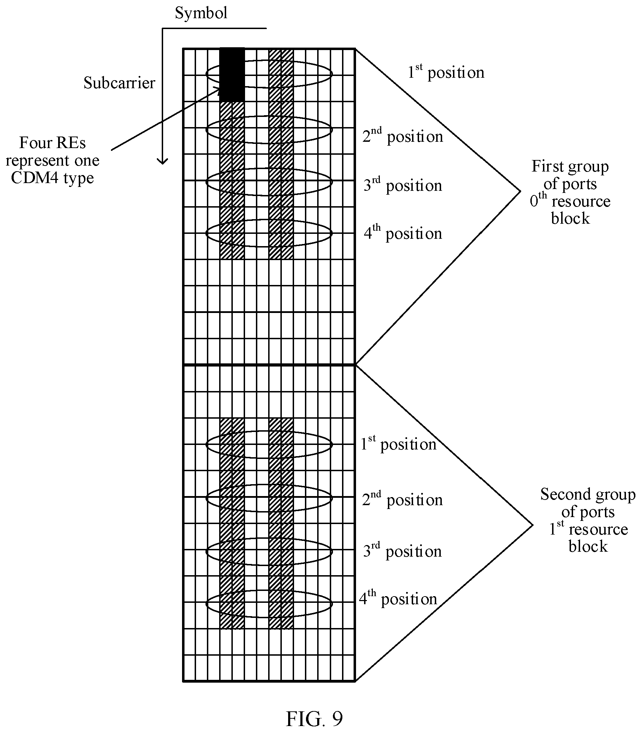

In addition, the Y positions corresponding to each group of ports may be a same position in an RB, or may be different positions in the RB. For example, FIG. 9 is a diagram of four frequency domain resource positions corresponding to each group of ports in two groups of ports. As shown in FIG. 9, a $1^{st}$ position in four frequency domain resource positions corresponding to a first group of ports may start from a $1^{st}$ subcarrier of a $0^{th}$ RB, and a $1^{st}$ position in four frequency domain resource positions corresponding to a second group of ports may start from a $3^{rd}$ subcarrier of a $1^{st}$ RB. The Y positions corresponding to each group of ports may be the same position in the RB, or may be the different positions in the RB. In this way, the Y positions of the CDM groups can be determined more flexibly.

In this embodiment of this application, a quantity of CDM groups is determined based on P and a type of the CDM group. For example, P is 64, the type of the CDM group is CDM8, and the quantity of CDM groups corresponding to 64 ports is 8.

In a possible implementation, pilot sequences of CDM groups corresponding to $y^{th}$ positions in all the X groups of ports are the same, and $1 \leq y \leq Y$. Deduction may be performed by analog. It is obtained that pilot sequences of CDM groups corresponding to corresponding positions in all the X groups of ports are the same. The following describes "corresponding" in embodiments of this application by using an example, so that a reader can better understand the solutions in embodiments of this application.

For example, a quantity of port groups is 2, and a pilot sequence of a CDM group corresponding to a $1^{st}$ position in a first group of ports is the same as a pilot sequence of a CDM group corresponding to a $2^{nd}$ second position in a second group of ports, or a pilot sequence of a CDM group corresponding to a $2^{nd}$ position in the first group of ports is the same as a pilot sequence of a CDM group corresponding to a $2^{nd}$ position in the second group of ports. Deduction may be performed by analog. In other words, pilot sequences of CDM groups corresponding to Y positions remain the same between two groups of ports. The pilot sequences of the CDM groups corresponding to the $y^{th}$ positions in all the groups of ports are the same, and $1 \leq y \leq Y$, so that a mapping rule of a pilot sequence corresponding to 32 ports can be reused, to achieve low implementation complexity.

In this embodiment of this application, a pilot mapped to a pilot resource may be determined based on $w_f(k')$, $w_t(l')$, and r(m'), where r(m') presents a pilot sequence, and $w_f(k')$ and $w_t(l')$ indicate a sequence formed by +1 and -1, and are related to the type of the CDM group. For example, for a CDM group whose type is CDM2, $w_f(k')$ and $w_t(l')$ are shown in Table 4.

Table 4

| Index | $[w_f(0)\ w_f(1)]$ | $w_t(0)$ |
|---|---|---|
| 0 | [+1 +1] | 1 |
| 1 | [+1 -1] | 1 |

m', l', and m' satisfy the following relationship:

$$m' = \lfloor n\alpha \rfloor + k' + \left\lfloor \frac{\bar{k}\rho}{N_{SC}^{RB}} \right\rfloor - \left\lfloor \frac{\bar{k}}{N_{SC}^{RB}} \right\rfloor$$

$$k = nN_{SC}^{RB} + \bar{k} - N_{SC}^{RB} \left\lfloor \frac{\bar{k}}{N_{SC}^{RB}} \right\rfloor + k'$$

$$l = \bar{l} + l'$$

$$\alpha = \begin{cases} \rho & \text{for } X = 1 \\ 2\rho & \text{for } X > 1 \end{cases}$$

$$n = 0, 1, \dots$$

$N_{SC}^{RB}$ indicates a quantity of subcarriers in one RB, and $\lfloor \cdot \rfloor$ indicates rounding down.

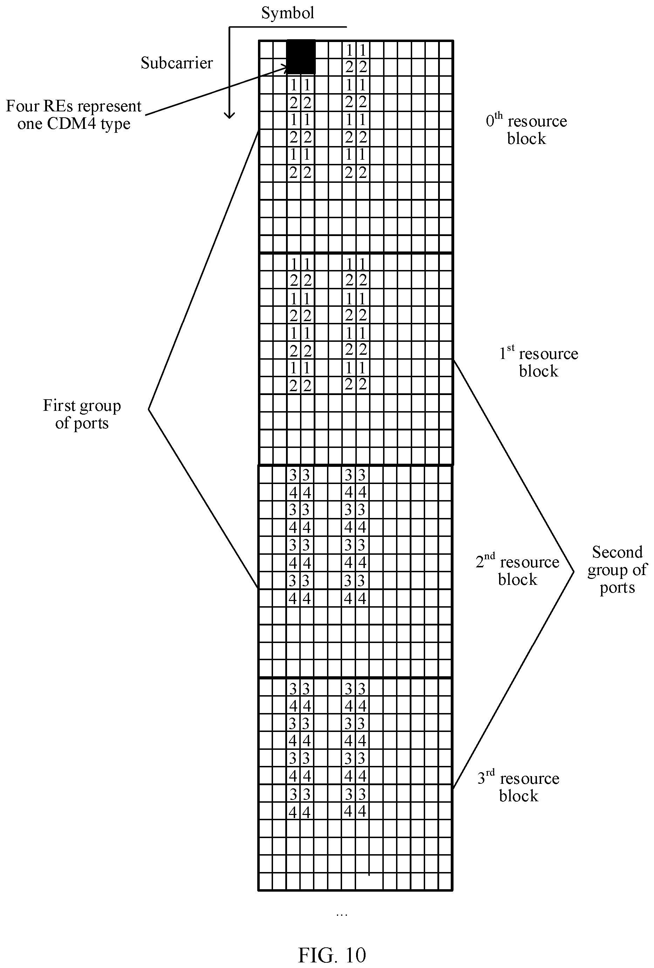

FIG. 10 is a diagram of pilot sequences of CDM groups corresponding to two groups of ports. As shown in FIG. 10, a type of CDM is CDM4. An example in which a $0^{th}$ RB corresponds to a first group of ports and a $1^{st}$ RB corresponds to a second group of ports is used. Each group of ports corresponds to four frequency domain resource positions, or each group of ports corresponds to eight time-frequency resource positions. A pilot sequence of a CDM group associated with a $1^{st}$ frequency domain resource position in the first group of ports is the same as a pilot sequence of a CDM group associated with a $1^{st}$ frequency domain resource position in the second group of ports, and both are 1, 2. Alternatively, a pilot sequence of a CDM group associated with a $1^{st}$ time-frequency resource position in the first group of ports is the same as a pilot sequence of a CDM group associated with a $1^{st}$ time-frequency resource position in the second group of ports, and both are 1, 2, 1, 2.

In another possible implementation, a difference between numbers of pilot sequences of CDM groups corresponding to $y^{th}$ positions in adjacent groups of ports in the X groups of ports is an integer greater than or equal to 1, and $1 \leq y \leq Y$. Deduction may be performed by analog. It is obtained that a difference between numbers of pilot sequences of CDM groups corresponding to corresponding positions in the adjacent groups of ports in the X groups of ports is an integer greater than or equal to 1. Description of "corresponding" is similar to the foregoing example, and details are not described herein again. Pilot sequences of the CDM groups corresponding to the Y positions are different among all the groups of ports, so that differential mapping can be performed on the pilot sequences corresponding to all the groups of ports. This is more flexible.

In this embodiment of this application, a pilot sequence mapped to a pilot resource may be determined based on $w_f(k')$, $w_t(l')$, and r(m'), where r(m') presents a pilot sequence, and $w_f(k')$ and $w_t(l')$ indicate a sequence formed by +1 and -1, and are related to the type of the CDM group. For example, when the difference between the numbers of the pilot sequences of the CDM groups corresponding to the $y^{th}$ positions in the adjacent groups of ports in the X groups of ports is an integer of 1 (where $1 \leq y \leq Y$), m', l', and m' satisfy the following relationship:

$$m' = \lfloor n\alpha \rfloor + k' + \left\lfloor \frac{\bar{k}\rho}{N_{SC}^{RB}} \right\rfloor$$

$$k = nN_{SC}^{RB} + \bar{k} + k'$$

$$l = \bar{l} + l'$$

$$\alpha = \{ \begin{matrix} \rho & \text{for } X = 1 \\ 2\rho & \text{for } X > 1 \end{matrix}$$

$$n = 0, 1, \ldots$$

$N_{SC}^{RB}$ indicates a quantity of subcarriers in one RB, and $\lfloor \cdot \rfloor$ indicates rounding down.

In other words, when the difference between the numbers of the pilot sequences of the CDM groups corresponding to the $y^{th}$ positions in the adjacent groups of ports in the X groups of ports is 1, pilot sequences of CDM groups corresponding to $y^{th}$ positions in all of a plurality of groups of ports are consecutive.

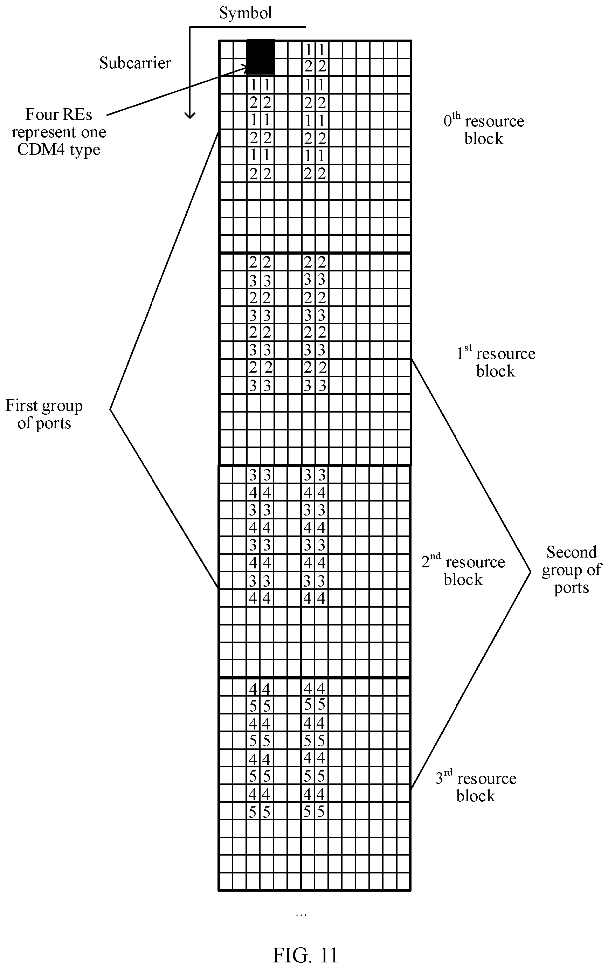

FIG. 11 is another diagram of pilot sequences of CDM groups corresponding to two groups of ports. As shown in FIG. 11, a difference between numbers of pilot sequences of CDM groups corresponding to Y positions in one group of ports in the two groups of ports and numbers of pilot sequences of CDM groups corresponding to Y positions in the other group of ports is 1, and a type of CDM is CDM4. An example in which a $0^{th}$ RB corresponds to a first group of ports and a $1^{st}$ RB corresponds to a second group of ports is used. Each group of ports corresponds to four frequency domain resource positions, or each group of ports corresponds to eight time-frequency resource positions. A difference between a number of a pilot sequence of a CDM group associated with a $1^{st}$ frequency domain resource position in the first group of ports and a number of a pilot sequence of a CDM group associated with a $1^{st}$ frequency domain resource position in the second group of ports is 1, the pilot sequence of the CDM group associated with the $1^{st}$ frequency domain resource position in the first group of ports is 1, 2, and the pilot sequence of the CDM group associated with the $1^{st}$ frequency domain resource position in the second group of ports is 2, 3. Alternatively, a difference between a number of a pilot sequence of a CDM group associated with a $1^{st}$ time-frequency resource position in the first group of ports and a number of a pilot sequence of a CDM group associated with a $1^{st}$ time-frequency resource position in the second group of ports is 1, the pilot sequence of the CDM group associated with the first time-frequency resource position in the first group of ports is 1, 2, 1, 2, and the pilot sequence of the CDM group corresponding to the $1^{st}$ first time-frequency resource position in the second group of ports is 2, 3, 2, 3.

It should be understood that RBs carrying pilot resources are a plurality of consecutive RBs. A pilot resource corresponding to a same group of ports are not sent only once, but are repeatedly sent in consecutive RBs at a granularity of a port group. For example, corresponding to the examples in FIG. 10 and FIG. 11, the CDM group associated with the first group of ports is sent in the $0^{th}$ RB, the CDM group associated with the second group of ports is sent in the $1^{st}$ RB, the CDM group associated with the first group of ports is repeatedly sent in a $2^{nd}$ RB, and the CDM group associated with the second group of ports is repeatedly sent in a $3^{rd}$ RB. Deduction may be performed by analog. The CDM group associated with the first group of ports is sent in an evennumbered RB, and the CDM group associated with the second group is sent in an odd-numbered RB. In this way, a pilot resource carried by a port group are transmitted at a granularity of the RB. A pilot sequence corresponding to each CDM group corresponding to each group of ports is consecutive in frequency domain.

It should be noted that, when the quantity P of ports is greater than a first threshold, frequency-domain density ρ of a measured pilot is less than a second threshold, where $\rho$ indicates a quantity of resource elements occupied by each port in each RB. For example, the first threshold may be 64, and the second threshold may be 0.5. For example, the resource element may be an RE. P cannot be infinitely large. The second threshold may be limited by using the first threshold, to avoid excessively large pilot overheads caused by an excessively large quantity of ports.

For example, when P is 64 or 128, the quantity of the ports and the frequency-domain density of the measured pilot are shown in Table 5.

Table 5

| Quantity of ports | Density |
|---|---|
| 64 ports | 0.5 or 0.25 |
| 128 ports | 0.25 |

For example, indexes of the CDM groups that correspond to each group of ports in the X groups of ports and that are associated with the Y positions are sorted in an order of a port group, a frequency domain resource position, and a time domain position, so that in each group of ports corresponding to the indexes of the CDM groups, a polarization direction of a half of the ports is a first polarization direction, and a polarization direction of the other half of the ports is a second polarization direction. It should be understood that a port whose polarization direction is the first polarization direction and a port whose polarization direction is the second polarization direction may correspond to a same physical port position. In this solution, a polarization direction configuration corresponding to 32 ports can be reused, so that resource overheads are reduced and low implementation complexity is achieved.

Table 6 shows an example in which port group indexes of both two groups of ports are sorted in an order of a port group, Y frequency domain resource positions, and a time domain position. As shown in Table 6, the total quantity of the ports is 64. The ports are grouped into two groups, and each group uses CDM8 corresponding to 32 ports. ' indicates a second group of ports, subscripts "0, 1, 2, and 3" of k indicate a 1st frequency domain resource position, a 2nd frequency domain resource position, a 3rd frequency domain resource position, and a 4th frequency domain resource position, and a subscript "0" of l indicates a 1st time domain resource position. CDM group indexes are shown in the table.

Table 6

| $(\bar{k}, \bar{l})$ | CDM group index |
|---|---|
| $(k_0, l_0)$ | 0 |
| $(k'_0, l_0)$ | 1 |
| $(k_1, l_0)$ | 2 |
| $(k'_1, l_0)$ | 3 |
| $(k_2, l_0)$ | 4 |
| $(k'_2, l_0)$ | 5 |
| $(k_3, l_0)$ | 6 |
| $(k'_3, l_0)$ | 7 |

Table 7 shows an example in which port group indexes of both two groups of ports are sorted in an order of a port group, Y frequency domain resource positions, and a time domain position. As shown in Table 7, the total quantity of the ports is 64. The ports are grouped into two groups, and each group uses CDM4 corresponding to 32 ports. ' indicates a second group of ports, subscripts "0, 1, 2, and 3" of k indicate a 1st frequency domain resource position, a 2nd frequency domain resource position, a 3rd frequency domain resource position, and a 4th frequency domain resource position, and subscripts "0 and 1" of l indicate a 1st time domain resource position and a 2nd time domain resource position. CDM group indexes are shown in the table.

Table 7

| $(\bar{k}, \bar{l})$ | CDM group index |
|---|---|
| $(k_0, l_0)$ | 0 |
| $(k_0', l_0)$ | 1 |
| $(k_1, l_0)$ | 2 |
| $(k_1', l_0)$ | 3 |
| $(k_2, l_0)$ | 4 |
| $(k_2', l_0)$ | 5 |
| $(k_3, l_0)$ | 6 |
| $(k_3', l_0)$ | 7 |
| $(k_0, l_1)$ | 8 |
| $(k_0', l_1)$ | 9 |
| $(k_1, l_1)$ | 10 |
| $(k_1', l_1)$ | 11 |
| $(k_2, l_1)$ | 12 |
| $(k_2', l_1)$ | 13 |
| $(k_3, l_1)$ | 14 |
| $(k_3', l_1)$ | 15 |

Table 8 shows an example in which port group indexes of four groups of ports are sorted in an order of a port group, Y frequency domain resource positions, and a time domain position. As shown in Table 8, the total quantity of the ports is 128. The ports are grouped into two groups, and each group uses CDM8 corresponding to 32 ports. ' indicates a second group of ports, " indicates a third group of ports, and ‴ indicates a fourth group of ports. Subscripts "0, 1, 2, 3" of k indicates a 1st frequency domain resource position, a 2nd frequency domain resource position, a 3rd frequency domain resource position, and a 4th frequency domain resource position, and a subscript "0" of 1 indicates a 1st time domain resource position. CDM group indexes are shown in the table.

Table 8

| $(\bar{k}, \bar{l})$ | CDM group index |
|---|---|
| $(k_0, l_0)$ | 0 |
| $(k_0', l_0)$ | 1 |
| $(k_0'', l_0)$ | 2 |
| $(k_0''', l_0)$ | 3 |
| $(k_1, l_0)$ | 4 |
| $(k_1', l_0)$ | 5 |
| $(k_1'', l_0)$ | 6 |
| $(k_1''', l_0)$ | 7 |

(continued)

| $(\bar{k}, \bar{l})$ | CDM group index |
|---|---|
| $(k_2, l_0)$ | 8 |
| $(k_2', l_0)$ | 9 |
| $(k_2'', l_0)$ | 10 |
| $(k_2''', l_0)$ | 11 |
| $(k_3, l_0)$ | 12 |
| $(k_3', l_0)$ | 13 |
| $(k_3'', l_0)$ | 14 |
| $(k_3''', l_0)$ | 15 |

As shown in the foregoing Table 6, Table 7, or Table 8, a polarization direction corresponding to a CDM group whose CDM group index number is 0 is the first polarization direction, and a polarization direction corresponding to a CDM group whose CDM group index number is 8 is the second polarization direction. Deduction may be performed by analog. Details are not described herein again.

In this embodiment of this application, when the quantity of the ports is greater than 32, the time-frequency resource positions of the CDM groups that correspond to each group of ports in the X groups of ports and that are associated with the Y positions are determined by grouping the ports whose quantity is greater than 32. If a terminal device in a system can only support pilot mapping corresponding to ports whose quantity is less than or equal to 32, when the terminal device has a pilot measurement requirement, a network device may configure, by using a measured pilot resource, a resource block corresponding to any group of ports in the X configured groups of ports to carry a pilot resource corresponding to the ports whose quantity is less than or equal to 32, and notify the terminal device of pilot resource positions corresponding to the ports whose quantity is less than or equal to 32.

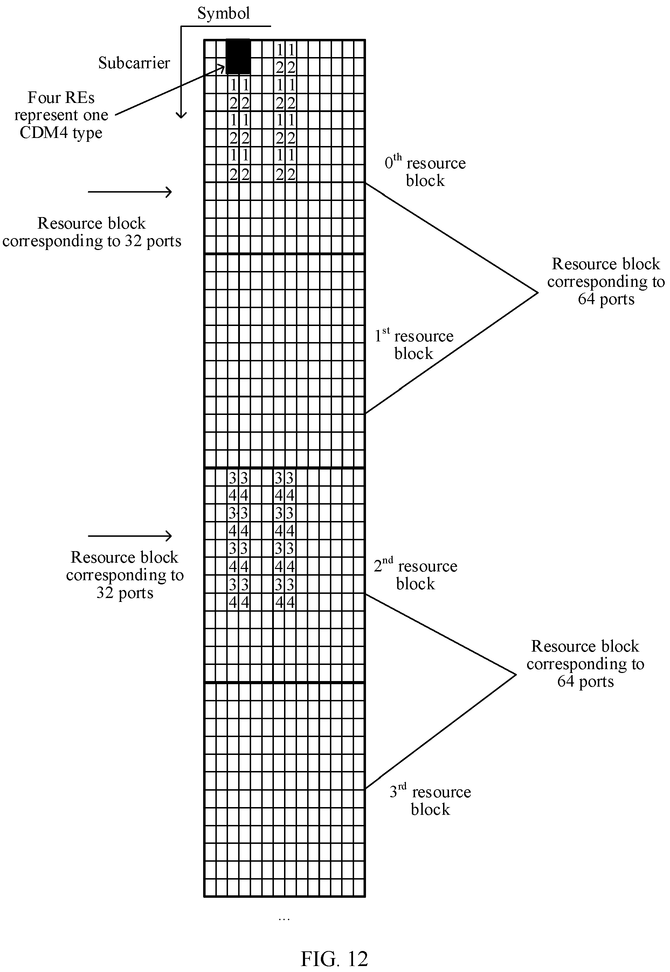

FIG. 12 is a diagram in which a resource block corresponding to any group of ports in X groups of ports is used to carry a pilot resource corresponding to ports whose quantity is less than or equal to 32 according to an embodiment of this application. As shown in FIG. 12, if a terminal device in a system can only support pilot mapping corresponding to the ports whose quantity is than or equal to 32, the pilot resource corresponding to the ports whose quantity is less than or equal to 32 may be transmitted in a 0th resource block, a 2nd resource block, a 4th resource block, and the like. Details are not described in this embodiment of this application. Based on a configuration of a network device, the terminal device subsequently receives a pilot signal in the 0th resource block, the 2nd resource block, the 4th resource block, and the like, and performs measurement. In addition, for a terminal device that supports a pilot corresponding to ports whose quantity is greater than 32, the terminal device may receive a pilot signal in a 0th resource block, a 1st resource block, a 2nd resource block, a 3rd resource block, and the like, and perform measurement. In this case, a channel with 64 ports is measured.

In this embodiment of this application, a pilot resource corresponding to a maximum of 32 ports can be carried in the resource block corresponding to the any group of ports in the X groups of ports. A configuration of a pilot resource corresponding to ports whose quantity is greater than 32 can be reused. The pilot resource corresponding to a maximum of 32 ports and the pilot resource corresponding to the ports whose quantity is greater than 32 share a same reference signal. When the quantity of the ports is less than or equal to 32, a pilot resource corresponding to ports whose quantity is less than 32 can also be transmitted on a resource block configured when there are more than 32 ports, to reduce overheads of separately configuring the pilot resource corresponding to the ports whose quantity is greater than 32 and the pilot resource corresponding to the ports whose quantity is less than or equal to 32. In addition, according to the foregoing CDM index method, it can be ensured that a polarization direction of a half of the ports in each group of ports is the first polarization direction, and a polarization direction of the other half of the ports is the second polarization direction. Therefore, polarization direction multiplexing of the terminal device when the quantity of ports is less than or equal to 32 can be met.

S620: The network device sends first indication information, and correspondingly, the terminal device receives the first indication information.

The first indication information indicates the time-frequency resource positions of the CDM groups that correspond to each group of ports in the X groups of ports and that are associated with the Y positions. In this embodiment of this application, the first indication information may include two pieces of indication information. One piece of indication information indicates a time domain resource position, and the other piece of indication information indicates a frequency domain resource position. Alternatively, the first indication information may be an indication indicating a time-frequency position. This is not limited in this application.

In this embodiment of this application, the first indication information may be a radio resource control protocol (radio resource control, RRC) message, or may be a multiple access control (multiple access control, MAC) control element (control element, CE) message, or may be downlink control information (downlink control information, DCI). This is not limited in this application.

S630: The terminal device measures, based on the first indication information, a pilot signal transmitted on ports corresponding to the CDM group.

In this embodiment of this application, a time-frequency resource position of a corresponding port may be determined based on the time-frequency resource positions of the CDM group that correspond to each group of ports in the X groups of ports and that are associated with the Y positions. Further, a time-frequency resource position of a pilot resource mapped to the port may be determined, so that the terminal device can measure the pilot signal, to obtain channel state information.

According to the pilot mapping method provided in this embodiment of this application, when the quantity of the ports is greater than 32, the time-frequency resources of the CDM groups associated with each group of ports can be determined. The network device sends, to the terminal device, the first indication information indicating the time-frequency resource positions of the CDM groups, so that the terminal device can measure the pilot signal transmitted on the ports corresponding to the CDM group, mapping of a pilot resource corresponding to ports whose quantity is greater than 32 is implemented, and a pilot measurement requirement corresponding to an increasing quantity of ports is met. In addition, the ports are grouped, to reuse most configurations corresponding to 32 ports, and reduce resource overheads. In particular, the indexes of the CDM groups are sorted in an order of a port group, Y frequency domain resource positions, and a time domain position, so that a polarization direction configuration corresponding to 32 ports can be reused, and low implementation complexity is achieved. In addition, the ports are grouped, to limit a maximum quantity of ports, and avoid excessively large pilot overheads caused by an excessively large quantity of ports.

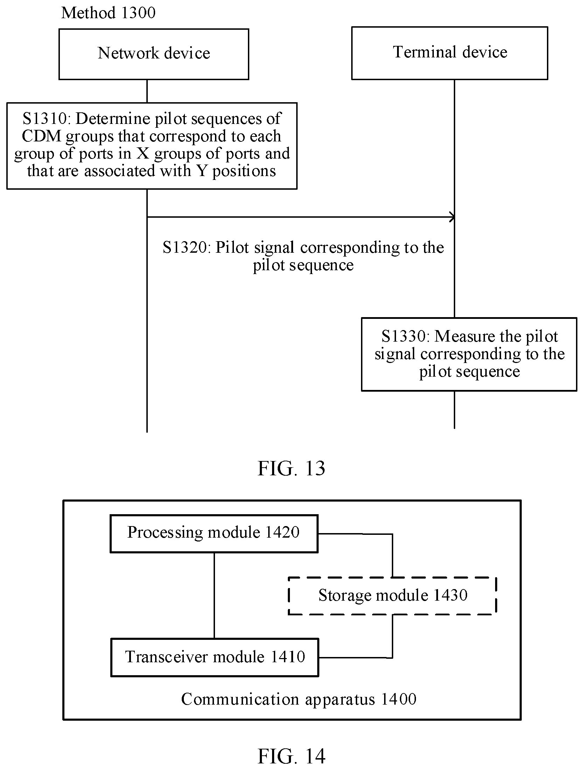

FIG. 13 is a diagram of another pilot mapping method according to an embodiment of this application. The method is described by using interaction between a network device and a terminal device as an example. As shown in FIG. 13, the method 1300 includes the following steps.

S1310: The network device determines pilot sequences of CDM groups that correspond to each group of ports in X groups of ports and that are associated with Y positions.

For related descriptions of X, Y, a time-frequency resource position corresponding to the CDM group, the pilot sequence, frequency-domain density $\rho$ of a measured pilot, and the like, refer to the descriptions in the embodiment shown in FIG. 6. Details are not described herein again.

S1320: The network device sends a pilot signal corresponding to the pilot sequence to the terminal device, and correspondingly, the terminal device receives the pilot signal corresponding to the pilot sequence from the network device.

In this embodiment of this application, the pilot sequence is mapped to the pilot resource for transmission.

S1330: The terminal device measures the pilot signal.

In this embodiment of this application, the terminal device measures the pilot signal, to obtain channel state information.

According to the pilot mapping method provided in this embodiment of this application, when a quantity of the ports is greater than 32, the pilot sequences of the CDM groups associated with each group of ports can be determined, so that the pilot sequences are mapped to different pilot resources, mapping of a pilot resource corresponding to ports whose quantity is greater than 32 is implemented, and a pilot measurement requirement corresponding to an increasing quantity of ports is met. In addition, the ports are grouped, to reuse most configurations corresponding to 32 ports, resource overheads are reduced, and low implementation complexity is achieved. In addition, the ports are grouped, to limit a maximum quantity of ports, and avoid excessively large pilot overheads caused by an excessively large quantity of ports.

The foregoing mainly describes the solutions provided in embodiments of this application from a perspective of interaction between the terminal device and the network device. Correspondingly, an embodiment of this application further provides a communication apparatus, and the communication apparatus is configured to implement the foregoing methods. The communication apparatus may be the network device in the foregoing method embodiment, an apparatus including the foregoing network device, or a component that can be used in the network device. Alternatively, the communication apparatus may be the terminal device in the foregoing method embodiment, an apparatus including the foregoing terminal device, or a component that can be used in the terminal device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be understood that, in embodiments of this application, module division is an example, and is merely logical function division. In actual implementation, another division manner may be used.

For example, FIG. 14 is a diagram of a communication apparatus according to an embodiment of this application. For example, the communication apparatus is the network device in the foregoing method embodiment. The network device 1400 includes a transceiver module 1410 and a processing module 1420. The transceiver module 1410 may also be referred to as a transceiver unit, and is configured to implement a receiving function and a sending function. For example, the transceiver module 1410 may be a transceiver circuit, a transceiver machine, a transceiver, or a communication interface.

In a solution, the processing module 1420 is configured to determine pilot sequences of CDM groups that correspond to each group of ports in X groups of ports and that are associated with Y positions, where each group of ports is distributed in a different RB, X is determined based on a total quantity P of ports, a quantity of CDM groups is determined based on P and a type of the CDM group, $X>1$, $Y\geq1$, $P>32$, and X, Y, and P are integers.

The transceiver module 1410 is configured to send a pilot signal corresponding to the pilot sequence.

In a possible implementation, pilot sequences of CDM groups corresponding to $y^{th}$ positions in all the X groups of ports are the same, and $1\leq y\leq Y$.

In another possible implementation, a difference between numbers of pilot sequences of CDM groups corresponding to $y^{th}$ positions in adjacent groups of ports in the X groups of ports is an integer greater than or equal to 1, and $1\leq y\leq Y$.

In another solution, the processing module 1420 is configured to determine time-frequency resource positions of CDM groups that correspond to each group of ports in X groups of ports and that are associated with Y positions, where each group of ports is distributed in a different RB, X is determined based on a total quantity P of ports, a quantity of CDM groups is determined based on P and a type of the CDM group, $X>1$, $Y\geq1$, $P>32$, and X, Y, and P are integers.

The transceiver module 1410 is configured to send first indication information, where the first indication information indicates the time-frequency resource positions of the CDM groups that correspond to each group of ports in the X groups of ports and that are associated with the Y positions.

In this embodiment of this application, indexes of the CDM groups that correspond to each group of ports in the X groups of ports and that are associated with the Y positions are sorted in an order of a port group, Y frequency domain resource positions, and a time domain position, so that in each group of ports corresponding to the indexes of the CDM groups, a polarization direction of a half of the ports is a first polarization direction, and a polarization direction of the other half of the ports is a second polarization direction.

In a possible implementation, pilot sequences of CDM groups corresponding to $y^{th}$ positions in all the X groups of ports are the same, and $1\leq y\leq Y$.

In another possible implementation, a difference between numbers of pilot sequences of CDM groups corresponding to $y^{th}$ positions in adjacent groups of ports in the X groups of ports is an integer greater than or equal to 1, and $1\leq y\leq Y$.

When P is greater than a first threshold, $\rho$ is less than a second threshold, and $\rho$ is frequency-domain density, and indicates a quantity of resource elements occupied by each port in each RB.

In a possible implementation, Y positions in each group of ports in the X groups of ports are determined based on a bitmap.

In another possible implementation, Y positions corresponding to a first group of ports in the X groups of ports are determined based on a bitmap; and Y positions corresponding to another group of ports in the X groups of ports other than the first group of ports are determined based on a frequency domain resource position relationship that is between the first group of ports and the another group of ports and that is agreed on in a protocol.

In this embodiment of this application, the Y positions are Y frequency domain resource positions.

In this embodiment of this application, an RB corresponding to any group of ports in the X groups of ports is used to carry a pilot resource corresponding to ports whose quantity is less than or equal to 32.

All related content of the steps in the foregoing method embodiment may be cited in function descriptions of the corresponding functional modules. Details are not described herein again. Optionally, the communication apparatus 1400 may further include a storage module 1430. The storage module 1430 may be configured to store instructions and/or data. The processing module 1420 may read the instructions and/or the data in the storage module 1430.

In this embodiment of this application, the network device 1400 is presented in a form in which functional modules are obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the network device 1400 may be in a form of the communication apparatus 500 shown in FIG. 5.

For example, the processor 501 in the communication apparatus 500 shown in FIG. 5 may invoke the computer-executable instructions stored in the memory 503, to cause the communication apparatus 500 to perform a signal transmission method in the foregoing method embodiment.

Specifically, functions/implementation processes of the transceiver module 1410 and the processing module 1420 in FIG. 13 may be implemented by the processor 501 in the communication apparatus 500 shown in FIG. 5 by invoking the computer-executable instructions stored in the memory 503. Alternatively, a function/an implementation process of the processing module 1420 in FIG. 14 may be implemented by the processor 501 in the communication apparatus 500 shown in FIG. 5 by invoking the computer-executable instructions stored in the memory 503, and a function/an implementation process of the transceiver module 1410 in FIG. 14 may be implemented through the communication interface 504 in the communication apparatus 500 shown in FIG. 5.

Because the network device 1400 provided in this embodiment of this application may perform the foregoing signal transmission method, for a technical effect that can be obtained by the network device 1400, refer to the foregoing method embodiment. Details are not described herein again.

Alternatively, for example, the communication apparatus is the terminal device in the foregoing method embodiment. The terminal device 1400 includes a transceiver module 1410 and a processing module 1420. The transceiver module 1410 may also be referred to as a transceiver unit, and is configured to implement a receiving function and a sending function. For example, the transceiver module 1410 may be a transceiver circuit, a transceiver machine, a transceiver, or a communication interface.

In a solution, the transceiver module 1410 is configured to receive a pilot resource corresponding to a pilot sequence, where the pilot sequence is determined based on CDM groups that correspond to each group of ports in X groups of ports and that are associated with Y positions, each group of ports is distributed in a different RB, X is determined based on a total quantity P of ports, a quantity of CDM groups is determined based on P and a type of the CDM group, $X>1$, $Y\geq1$, $P>32$, and X, Y, and P are integers.

The processing module 1420 is configured to measure a pilot signal.

In a possible implementation, pilot sequences of CDM groups corresponding to $y^{th}$ positions in all the X groups of ports are the same, and $1\leq y\leq Y$.

In another possible implementation, a difference between numbers of pilot sequences of CDM groups corresponding to $y^{th}$ positions in adjacent groups of ports in the X groups of ports is an integer greater than or equal to 1, and $1\leq y\leq Y$.

In another solution, the transceiver module 1410 is configured to receive first indication information, where the first indication information indicates time-frequency resource positions of CDM groups that correspond to each group of ports in X groups of ports and that are associated with Y positions, each group of ports is distributed in a different RB, X is determined based on a total quantity P of ports, a quantity of CDM groups is determined based on P and a type of the CDM group, X is an integer greater than 1, Y is an integer greater than or equal to 1 and less than or equal to 6, and P is an integer greater than 32; and

The processing module 1420 is configured to measure, based on the time-frequency resource positions of the CDM groups that correspond to each group of ports in the X groups of ports and that are associated with the Y positions, a pilot signal transmitted on ports corresponding to the CDM group.

In this embodiment of this application, indexes of the CDM groups that correspond to each group of ports in the X groups of ports and that are associated with the Y positions are sorted in an order of a port group, Y frequency domain resource positions, and a time domain position, so that in each group of ports corresponding to the indexes of the CDM groups, a polarization direction of a half of the ports is a first polarization direction, and a polarization direction of the other half of the ports is a second polarization direction.

In a possible implementation, pilot sequences of CDM groups corresponding to $y^{th}$ positions in all the X groups of ports are the same, and $1\leq y\leq Y$.

In another possible implementation, a difference between numbers of pilot sequences of CDM groups corresponding to $y^{th}$ positions in adjacent groups of ports in the X groups of ports is an integer greater than or equal to 1, and $1\leq y\leq Y$.

When P is greater than a first threshold, $\rho$ is less than a second threshold, and $\rho$ is frequency-domain density, and indicates a quantity of resource elements occupied by each port in each RB.

In a possible implementation, the Y positions corresponding to each group of ports in the X groups of ports are determined based on a bitmap.

In another possible implementation, Y positions corresponding to a first group of ports in the X groups of ports are determined based on a bitmap; and Y positions corresponding to another group of ports in the X groups of ports other than the first group of ports are determined based on a frequency domain resource position relationship that is between the first group of ports and the another group of ports and that is agreed on in a protocol.

In this embodiment of this application, the Y positions may be frequency domain resource positions.

In this embodiment of this application, an RB corresponding to any group of ports in the X groups of ports is used to carry a pilot resource corresponding to ports whose quantity is less than or equal to 32.

All related content of the steps in the foregoing method embodiment may be cited in function descriptions of the corresponding functional modules. Details are not described herein again. Optionally, the communication apparatus 1400 may further include a storage module 1430. The storage module 1430 may be configured to store instructions and/or data. The processing module 1420 may read the instructions and/or the data in the storage module 1430.

In this embodiment of this application, the terminal device 1400 is presented in a form in which functional modules are obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the terminal device 1400 may be in a form of the communication apparatus 500 shown in FIG. 5.

For example, the processor 501 in the communication apparatus 500 shown in FIG. 5 may invoke the computer-executable instructions stored in the memory 503, to cause the communication apparatus 500 to perform a signal transmission method in the foregoing method embodiment.

Specifically, functions/implementation processes of the transceiver module 1410 and the processing module 1420 in FIG. 14 may be implemented by the processor 501 in the communication apparatus 500 shown in FIG. 5 by invoking the computer-executable instructions stored in the memory 503. Alternatively, a function/an implementation process of the processing module 1420 in FIG. 14 may be implemented by the processor 501 in the communication apparatus 500 shown in FIG. 5 by invoking the computer-executable instructions stored in the memory 503, and a function/an implementation process of the transceiver module 1410 in FIG. 14 may be implemented through the communication interface 504 in the communication apparatus 500 shown in FIG. 5.

Because the terminal device 1400 provided in this embodiment of this application may perform the foregoing signal transmission method, for a technical effect that can be obtained by the terminal device 1400, refer to the foregoing method embodiment. Details are not described herein again.

It should be understood that, one or more of the foregoing modules or units may be implemented by software, hardware, or a combination thereof. When any one of the foregoing modules or units is implemented by software, the software exists in a form of computer program instructions, and is stored in a memory. A processor may be configured to execute the program instructions and implement the foregoing method procedures. The processor may be built into a SoC (System on Chip) or an ASIC, or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include the chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is caused to perform the method according to any one of the foregoing method embodiments or any implementation of the method embodiment.

Optionally, an embodiment of this application further provides a communication system. The communication system includes the first network device in the foregoing method embodiment and the terminal device in the foregoing method embodiment.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, including one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement a plurality of functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that such modifications and variations fall within the scope of protection defined by the following claims and equivalent technologies thereof.

**Claims**

1. A pilot mapping method, comprising:

   determining time-frequency resource positions of code division multiplexing CDM groups that correspond to each group of ports in X groups of ports and that are associated with Y positions, wherein each group of ports is distributed in a different resource block RB, X is determined based on a total quantity P of ports, a quantity of CDM groups is determined based on P and a type of the CDM group, $X>1$, $Y \geq 1$, $P>32$, and X, Y, and P are integers; and
   sending first indication information, wherein the first indication information indicates the time-frequency resource positions of the CDM groups that correspond to each group of ports in the X groups of ports and that are associated with the Y positions.

2. A pilot mapping method, comprising:

   receiving first indication information, wherein the first indication information indicates time-frequency resource positions of code division multiplexing CDM groups that correspond to each group of ports in X groups of ports and that are associated with Y positions, each group of ports is distributed in a different resource block RB, X is determined based on a total quantity P of ports, a quantity of CDM groups is determined based on P and a type of the CDM group, $X>1$, $Y \geq 1$, and X, Y, and P are integers; and
   measuring, based on the first indication information, a pilot signal transmitted on ports corresponding to the CDM group.

3. The method according to claim 1 or 2, wherein indexes of the CDM groups that correspond to each group of ports in the X groups of ports and that are associated with the Y positions are sorted in an order of a port group, a frequency domain resource position, and a time domain resource position.

4. The method according to claim 3, wherein in each group of ports corresponding to the indexes of the CDM groups, a polarization direction of a half of the ports is a first polarization direction, and a polarization direction of the other half of the ports is a second polarization direction.

**5.** The method according to any one of claims 1 to 4, wherein pilot sequences of CDM groups corresponding to $y^{th}$ positions in all the X groups of ports are the same, $1 \leq y \leq Y$, and y is an integer.

**6.** The method according to any one of claims 1 to 4, wherein a difference between numbers of pilot sequences of CDM groups corresponding to $y^{th}$ positions in adjacent groups of ports in the X groups of ports is an integer greater than or equal to 1, $1 \leq y \leq Y$, and y is an integer.

**7.** The method according to any one of claims 1 to 6, wherein when P is greater than a first threshold, $\rho$ is less than a second threshold, and $\rho$ indicates a quantity of resource elements REs occupied by each port in each RB.

**8.** The method according to claim 7, wherein the first threshold is 64, and the second threshold is 0.5.

**9.** The method according to any one of claims 1 to 8, wherein the Y positions corresponding to each group of ports in the X groups of ports are determined based on a bitmap.

**10.** The method according to any one of claims 1 to 9, wherein Y positions corresponding to a first group of ports in the X groups of ports are determined based on a bitmap; and
Y positions corresponding to another group of ports in the X groups of ports other than the first group of ports are determined based on a frequency domain resource position relationship that is between the first group of ports and the another group of ports and that is agreed on in a protocol.

**11.** The method according to any one of claims 1 to 10, wherein the Y positions are Y frequency domain resource positions.

**12.** The method according to any one of claims 1 to 11, wherein an RB corresponding to any group of ports in the X groups of ports is used to carry a pilot resource corresponding to ports whose quantity is less than or equal to 32.

**13.** A pilot mapping method, comprising:

determining pilot sequences of code division multiplexing CDM groups that correspond to each group of ports in X groups of ports and that are associated with Y positions, wherein each group of ports is distributed in a different resource block RB, X is determined based on a total quantity P of ports, a quantity of CDM groups is determined based on P and a type of the CDM group, X>1, Y≥1, P>32, and X, Y, and P are integers; and
sending a pilot signal corresponding to the pilot sequence.

**14.** A pilot mapping method, comprising:

receiving a pilot signal corresponding to a pilot sequence, wherein the pilot sequence is determined based on code division multiplexing CDM groups that correspond to each group of ports in X groups of ports and that are associated with Y positions, each group of ports is distributed in a different resource block RB, X is determined based on a total quantity P of ports, a quantity of CDM groups is determined based on P and a type of the CDM group, X>1, Y≥1, P>32, and X, Y, and P are integers; and
measuring the pilot signal.

**15.** The method according to claim 13 or 14, wherein
pilot sequences of CDM groups corresponding to $y^{th}$ positions in all the X groups of ports are the same, $1 \leq y \leq Y$, and y is an integer.

**16.** The method according to claim 13 or 14, wherein
a difference between numbers of pilot sequences of CDM groups corresponding to $y^{th}$ positions in adjacent groups of ports in the X groups of ports is an integer greater than or equal to 1, $1 \leq y \leq Y$, and y is an integer.

**17.** A communication apparatus, comprising:

a processing module, configured to determine time-frequency resource positions of code division multiplexing CDM groups that correspond to each group of ports in X groups of ports and that are associated with Y positions, wherein each group of ports is distributed in a different resource block RB, X is determined based on a total quantity P of ports, a quantity of CDM groups is determined based on P and a type of the CDM group, X>1, Y≥1, P>32, and X, Y, and P are integers; and

a transceiver module, configured to send first indication information, wherein the first indication information indicates the time-frequency resource positions of the CDM groups that correspond to each group of ports in the X groups of ports and that are associated with the Y positions.

18. A communication apparatus, comprising:

a transceiver module, configured to receive first indication information, wherein the first indication information indicates time-frequency resource positions of code division multiplexing CDM groups that correspond to each group of ports in X groups of ports and that are associated with Y positions, each group of ports is distributed in a different resource block RB, X is determined based on a total quantity P of ports, a quantity of CDM groups is determined based on P and a type of the CDM group, X is an integer greater than 1, Y is an integer greater than or equal to 1 and less than or equal to 6, and P is an integer greater than 32; and

a processing module, configured to measure, based on the time-frequency resource positions of the CDM groups that correspond to each group of ports in the X groups of ports and that are associated with the Y positions, a pilot signal transmitted on ports corresponding to the CDM group.

19. The apparatus according to claim 17 or 18, wherein indexes of the CDM groups that correspond to each group of ports in the X groups of ports and that are associated with the Y positions are sorted in an order of a port group, Y frequency domain resource positions in one RB, and a time domain position in one RB.

20. The apparatus according to claim 19, wherein in each group of ports corresponding to the indexes of the CDM groups, a polarization direction of a half of the ports is a first polarization direction, and a polarization direction of the other half of the ports is a second polarization direction.

21. The apparatus according to any one of claims 17 to 20, wherein pilot sequences of the CDM groups corresponding to the Y positions remain the same among all the X groups of ports.

22. The apparatus according to any one of claims 17 to 20, wherein differences between numbers of pilot sequences of the CDM groups corresponding to the Y positions among all the X groups of ports are integers greater than or equal to 1.

23. The apparatus according to any one of claims 17 to 22, wherein when P is greater than a first threshold, $\rho$ is less than a second threshold, and $\rho$ indicates a quantity of resource elements REs occupied by each port in each RB.

24. The apparatus according to any one of claims 17 to 23, wherein the Y positions corresponding to each group of ports in the X groups of ports are determined based on a bitmap.

25. The apparatus according to any one of claims 17 to 23, wherein Y positions corresponding to a first group of ports in the X groups of ports are determined based on a bitmap; and

Y positions corresponding to another group of ports in the X groups of ports other than the first group of ports are determined based on a frequency domain resource position relationship that is between the first group of ports and the another group of ports and that is agreed on in a protocol.

26. The apparatus according to any one of claims 17 to 25, wherein the Y positions are Y frequency domain resource positions.

27. The apparatus according to any one of claims 17 to 26, wherein an RB corresponding to any group of ports in the X groups of ports is used to carry a pilot resource corresponding to ports whose quantity is less than or equal to 32.

28. A communication apparatus, comprising:

a processing module, configured to determine pilot sequences of code division multiplexing CDM groups that correspond to each group of ports in X groups of ports and that are associated with Y positions, wherein each group of ports is distributed in a different resource block RB, X is determined based on a total quantity P of ports, a quantity of CDM groups is determined based on P and a type of the CDM group, X>1, Y≥1, P>32, and X, Y, and P are integers; and

a transceiver module, configured to send a pilot signal corresponding to the pilot sequence.

29. A communication apparatus, comprising:

a transceiver module, configured to receive a pilot signal corresponding to a pilot sequence, wherein the pilot sequence is determined based on code division multiplexing CDM groups that correspond to each group of ports in X groups of ports and that are associated with Y positions, each group of ports is distributed in a different resource block RB, X is determined based on a total quantity P of ports, a quantity of CDM groups is determined based on P and a type of the CDM group, X>1, Y≥1, P>32, and X, Y, and P are integers; and
a processing module, configured to measure the pilot signal.

30. The apparatus according to claim 28 or 29, wherein pilot sequences of CDM groups corresponding to $y^{th}$ positions in all the X groups of ports are the same, 1≤y≤Y, and y is an integer.

31. The apparatus according to claim 28 or 29, wherein a difference between numbers of pilot sequences of CDM groups corresponding to $y^{th}$ positions in adjacent groups of ports in the X groups of ports is an integer greater than or equal to 1, 1≤y≤Y, and y is an integer.

32. A communication apparatus, wherein the communication apparatus comprises a processor, and the processor is configured to run a computer program or instructions, or is configured to cause, through a logic circuit, the communication apparatus to perform the method according to any one of claims 1 and 3 to 12, or to cause the communication apparatus to perform the method according to any one of claims 2 and 3 to 12.

33. A communication apparatus, wherein the communication apparatus comprises a processor, and the processor is configured to run a computer program or instructions, or is configured to cause, through a logic circuit, the communication apparatus to perform the method according to any one of claims 13, 15, and 16, or to cause the communication apparatus to perform the method according to any one of claims 14 to 16.

34. The apparatus according to claim 32 or 33, wherein the communication apparatus further comprises a communication interface, configured to input and/or output a signal.

35. The apparatus according to any one of claims 32 to 34, wherein the communication apparatus further comprises a memory, configured to store the computer program or the instructions.

36. A computer-readable storage medium, wherein the computer-readable storage medium stores computer instructions or a program, and when the computer instructions or the program is run on a computer, the communication apparatus is caused to perform the method according to any one of claims 1 and 3 to 12, or the communication apparatus is caused to perform the method according to any one of claims 2 and 3 to 12.

37. A computer-readable storage medium, wherein the computer-readable storage medium stores computer instructions or a program, and when the computer instructions or the program is run on a computer, the communication apparatus is caused to perform the method according to any one of claims 13, 15, and 16, or the communication apparatus is caused to perform the method according to any one of claims 14 to 16.

38. A communication system, wherein the communication system comprises the communication apparatus according to any one of claims 17 and 19 to 27 and the communication apparatus according to any one of claims 18 to 27.

39. A communication system, wherein the communication system comprises the communication apparatus according to any one of claims 28, 30, and 31 and the communication apparatus according to any one of claims 29 to 31.

FIG. 1

FIG. 2

Code domain

Frequency domain

Time domain

Time-frequency domain CDM

FIG. 3

Network device

Terminal device 2

Terminal device 1

FIG. 4

FIG. 5

Method 600

| Network device | Terminal device |

S610: Determine time-frequency resource positions of CDM groups that correspond to each group of ports in X groups of ports and that are associated with Y positions

S620: First indication information

S630: Measure, based on the first indication information, a pilot signal transmitted on ports corresponding to the CDM group

FIG. 6

Symbol

Subcarrier

Four REs represent
one CDM4 type

1<sup>st</sup> position

2<sup>nd</sup> position

3<sup>rd</sup> position

4<sup>th</sup> position

FIG. 7

Symbol

1<sup>st</sup> position

Subcarrier

2<sup>nd</sup> position

3<sup>rd</sup> position

4<sup>th</sup> position

5<sup>th</sup> position

6<sup>th</sup> position

7<sup>th</sup> position

8<sup>th</sup> position

Four REs represent
one CDM4 type

FIG. 8

FIG. 9

FIG. 10

FIG. 11

Symbol

Subcarrier

Four REs
represent one
CDM4 type

Resource block
corresponding to 32 ports

Resource block
corresponding to
32 ports

$0^{th}$ resource
block

$1^{st}$ resource
block

$2^{nd}$ resource
block

$3^{rd}$ resource
block

Resource block
corresponding to
64 ports

Resource block
corresponding to
64 ports

...

FIG. 12

Method 1300

```
┌─────────────────────┐                    ┌─────────────────────┐
│   Network device    │                    │   Terminal device   │
└─────────────────────┘                    └─────────────────────┘
```

S1310: Determine pilot sequences of
CDM groups that correspond to each
group of ports in X groups of ports and
that are associated with Y positions

S1320: Pilot signal corresponding to the
pilot sequence

S1330: Measure the pilot
signal corresponding to the
pilot sequence

FIG. 13

Processing module 1420

Storage module 1430

Transceiver module 1410

Communication apparatus 1400

FIG. 14

## INTERNATIONAL SEARCH REPORT

| International application No. |
| --- |
| **PCT/CN2024/109782** |

| A. | CLASSIFICATION OF SUBJECT MATTER |
| --- | --- |

H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI, VCN, CNKI: 导频, pilot, csi-rs, dmrs, 端口, port, cdm组, cdm group, 位置, position, location, 时域, 频域, 时频域, time domain, frequency domain, 数量, number, 资源块, RB, 类型, type, 大于, 多于, more than, 序列, sequence

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115118377 A (ZTE CORP.) 27 September 2022 (2022-09-27) description, paragraphs 26-42 | 1-39 |
| A | CN 110535590 A (ZTE CORP.) 03 December 2019 (2019-12-03) entire document | 1-39 |
| A | US 2023208594 A1 (HUAWEI TECHNOLOGIES CO., LTD.) 29 June 2023 (2023-06-29) entire document | 1-39 |
| A | WO 2022094972 A1 (QUALCOMM INC.) 12 May 2022 (2022-05-12) entire document | 1-39 |
| A | INTEL CORPORATION. "R1-1717373, On the remaining details of DM-RS" *3GPP TSG RAN WG1 Meeting 90-bis*, 13 October 2017 (2017-10-13), entire document | 1-39 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 November 2024** | **13 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/109782**

| Patent document cited in search report | | | Publication date (day/month/year) | Patent family member(s) | | | Publication date (day/month/year) |
|---|---|---|---|---|---|---|---|
| CN | 115118377 | A | 27 September 2022 | WO | 2022193895 | A1 | 22 September 2022 |
| | | | | KR | 20230151032 | A | 31 October 2023 |
| | | | | EP | 4311139 | A1 | 24 January 2024 |
| | | | | US | 2024171303 | A1 | 23 May 2024 |
| CN | 110535590 | A | 03 December 2019 | WO | 2020063764 | A1 | 02 April 2020 |
| | | | | EP | 4425810 | A2 | 04 September 2024 |
| | | | | CA | 3112961 | A1 | 02 April 2020 |
| | | | | CA | 3112961 | C | 29 August 2023 |
| | | | | FI | 3860025 | T3 | 09 August 2024 |
| | | | | US | 2021219327 | A1 | 15 July 2021 |
| | | | | US | 11224065 | B2 | 11 January 2022 |
| | | | | KR | 20210065162 | A | 03 June 2021 |
| | | | | ES | 2981858 | T3 | 10 October 2024 |
| | | | | EP | 3860025 | A1 | 04 August 2021 |
| | | | | EP | 3860025 | A4 | 24 November 2021 |
| | | | | EP | 3860025 | B1 | 05 June 2024 |
| | | | | US | 2022132551 | A1 | 28 April 2022 |
| | | | | US | 12004183 | B2 | 04 June 2024 |
| US | 2023208594 | A1 | 29 June 2023 | EP | 4199405 | A1 | 21 June 2023 |
| | | | | EP | 4199405 | A4 | 11 October 2023 |
| | | | | WO | 2022041081 | A1 | 03 March 2022 |
| | | | | CN | 116076045 | A | 05 May 2023 |
| WO | 2022094972 | A1 | 12 May 2022 | US | 2024048325 | A1 | 08 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311049615